# EUROPEAN PATENT SPECIFICATION

(11) **EP 2 522 838 B1**
(45) Date of publication and mention of the grant of the patent: **12.12.2018**
(21) Application number: 10842094.4
(22) Date of filing: 07.01.2010
(51) Int. Cl.: F02B 37/22, F02D 13/02, F02D 23/02, F02D 23/00, F02D 41/00, F02D 41/14, F02D 41/40

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(43) Date of publication of application: 14.11.2012
(73) Proprietor: TOYOTA JIDOSHA KABUSHIKI KAISHA, Toyota-shi, Aichi-ken, 471-8571 (JP)
(72) Inventor: KOGO, Tomoyuki, Toyota-shi Aichi 471-8571 (JP); ISHIYAMA, Shinobu, Toyota-shi Aichi 471-8571 (JP); OGAWA, Takashi, Toyota-shi Aichi 471-8571 (JP); ITO, Katsuhiro, Toyota-shi Aichi 471-8571 (JP); IWATA, Kazuyasu, Toyota-shi Aichi 471-8571 (JP); YANASE, Yoshinori, Toyota-shi Aichi 471-8571 (JP)
(74) Representative: TBK
(86) International application number: PCT/JP2010/050112
(87) International publication number: WO 2011/083577

(56) References cited:
- EP-A2- 1 243 779
- JP-A- 9 505 654
- JP-A- 2003 343 300
- JP-A- 2009 138 733
- JP-A- 2009 156 055
- JP-A- 2009 197 759
- JP-A- 2009 209 780

## Description

### Technical Field

The present invention relates to a control apparatus for an internal combustion engine, and particularly to a control apparatus for an internal combustion engine including a variable valve operating mechanism.

### Background Art

Heretofore, for example, Patent Document 1 discloses a valve timing control apparatus for an internal combustion engine including a variable valve operating mechanism which makes a valve overlap period, in which an intake valve open period and an exhaust valve open period overlap with each other, variable by changing the valve timing of at least one of the intake and exhaust valves. In this conventional control apparatus, it is arranged such that the valve timings of intake and exhaust valves are changed such that the timing at which a negative pressure wave caused by exhaust pulsation arrives at an exhaust port coincides with the valve overlap period of the intake and exhaust valves. According to such control, it becomes easier for fresh air to flow into a cylinder from the intake valve, and it is possible to make the burnt gas in the cylinder to be securely expelled to the exhaust valve by the fresh air flown into via the intake valve. That is, it is possible to allow a so-called scavenging effect to be exerted. As a result, the residual gas quantity is reduced, and the fresh air quantity to be taken into the cylinder can be increased. That is, the volumetric efficiency of intake air can be improved.

It is noted that the applicant of the present invention recognizes the below described documents including the above-described one as those that relate to the present invention.

### Citation List

### Patent Documents

Patent Document 1: Japanese Laid-open Patent Application Publication JP 11-22499 A
Patent Document 2: Japanese Laid-open Patent Application Publication JP 11-229915 A
Patent Document 3: Japanese Laid-open Patent Application Publication JP 2009-103084 A
Patent Document 4: JP 2009 138733 A

JP 2009 138733 A discloses a control apparatus for an internal combustion engine. This control apparatus generates exhaust pressure pulsation in an early stage while restricting deterioration of volume efficiency in a case where a demand for strengthening the exhaust pressure pulsation is provided in an internal combustion engine provided with a variable valve train which is capable of varying a valve overlap period, and a turbo supercharger of a variable nozzle type. When a demand for increasing exhaust pressure pulsation is detected at a time t0, the opening of a variable nozzle is controlled to be totally closed to set the valve overlap period to zero. After that, at a time t1 when it is judged that the exhaust pressure pulsation is increased, the opening of the variable nozzle is opened to a proper opening degree with favorable turbo efficiency. After opening control to the variable nozzle, at a time t2 when the turbo efficiency starts improving, the valve overlap period is set in such a way as to overlap with the timing when the exhaust pressure pulsation becomes a valley.

### Summary of Invention

### Technical Problem

There is known a control apparatus for an internal combustion engine in which a valve overlap period is set so as to coincide with the timing at which exhaust pulsation exhibits a trough to take advantage of scavenging effect as with the technique described in Patent Document 1 described above. In such a conventional control apparatus for an internal combustion engine, it is general that the exhaust pressure is acquired as an average value by a technique such as estimation, and the valve overlap period is controlled to be shorter based on the judgment that the scavenging effect decreases when the average value become high. However, two types of patterns as shown below exist as the change pattern of exhaust pulsation in association with a change of the operational state of the internal combustion engine. That is, they are a pattern in which an offset change occurs in which exhaust pulsation entirely changes in an increasing direction of exhaust pressure, and a pattern in which an amplitude change occurs in which the amplitude of exhaust pulsation changes more greatly than the minimum value of pressure at a trough of exhaust pulsation.

While the exhaust pressure increases as an average value in either of the two types of patterns as described above, the minimum value of pressure at a trough of exhaust pulsation becomes higher in the case of the offset change, and in contrast to that, the above-described minimum value of exhaust pulsation does not change so much in the case of the amplitude change. As the above-described minimum value of exhaust pulsation becomes lower, it becomes possible to secure a larger pressure difference between intake pressure and exhaust pressure so that the scavenging effect becomes large. In the conventional (commonly used) control described above, when a change of exhaust pulsation is the above-described offset change, it can be said that it is appropriate to control the valve overlap period to be shorter since the above-described minimum value of exhaust pulsation rises. However, since the above-described minimum value of exhaust pulsation does not change so much when a change of exhaust pulsation is the above-described amplitude change, it cannot be said that it is an appropriate control to judge that the scavenging effect becomes smaller; and control the valve overlap period to be shorter. As so far described, heretofore, such control as that distinguishes whether a change of exhaust pulsation is the above-described offset change or the above-described amplitude change when a rise of exhaust pressure is recognized is not performed. For this reason, the conventional control still has a room for improvement in effectively utilizing the scavenging effect.

The present invention has been made to solve the problems as described above, and has its object to provide a control apparatus for an internal combustion engine which enables to realize control that achieves a scavenging effect more effectively.

### Solution to Problem

The above object is solved by a control apparatus for an internal combustion engine having the features of claim 1.

Further developments are stated in the dependent claims.

### Advantageous Effects of Invention

According to the first aspect of the present invention, it becomes possible to realize control that achieves a scavenging effect more effectively by differentiating the control of the valve overlap period according to whether a change of exhaust pulsation is the offset change or the amplitude change when controlling the valve overlap period for utilizing the scavenging effect.

According to the second aspect of the present invention, it becomes possible to realize a control that achieves a scavenging effect more effectively by differentiating the control of the valve overlap period between the case where the first parameter changes and the case where the second parameter changes.

According to the third aspect of the present invention, it becomes possible to realize a control that achieves a scavenging effect more effectively by revealing parameters that identify the offset change and the amplitude change, and differentiating the control of the valve overlap period in consideration of which is the parameter that changes.

According to the fourth aspect of the present invention, after it is actually discriminated whether a change of exhaust pulsation is the offset change or the amplitude change, the control of the valve overlap period is differentiated based on the discrimination result. This enables to realize a control that achieves a scavenging effect more effectively.

According to the fifth aspect of the present invention, in a case where a valve overlap period has been set, it becomes possible to achieve a scavenging effect more effectively by differentiating the control of the valve overlap period according to the discrimination result of a change of exhaust pulsation.

According to the sixth aspect of the present invention, in a case where the valve overlap period has not been set, or has not substantially been set, it becomes possible to achieve a scavenging effect more effectively by differentiating the control of the valve overlap period according to the discrimination result of a change of exhaust pulsation.

According to the seventh aspect of the present invention, it is actually discriminated whether the change of exhaust pulsation is the offset change or the amplitude change according to a change of the first parameter or the second parameter. Then, the control of the valve overlap period is differentiated based on the discrimination result. This enables to realize a control that achieves a scavenging effect more effectively.

According to the eighth aspect of the present invention, in a case where a valve overlap period has been set, it becomes possible to achieve a scavenging effect more effectively by differentiating the control of the valve overlap period according to the result of discriminating a change of exhaust pulsation by utilizing the change of the first parameter or the second parameter.

According to the ninth aspect of the present invention, in a case where a valve overlap period has not been set, or has not substantially been set, it becomes possible to achieve a scavenging effect more effectively by differentiating the control of the valve overlap period according to the result of discriminating a change of exhaust pulsation by utilizing the change of the first parameter or the second parameter.

According to the tenth aspect of the present invention, it becomes possible to more accurately control the valve overlap period so as to bring out more scavenging effect by taking into consideration the difference in the influence (contribution) on the change of the minimum value of exhaust pulsation between individual parameters within a plurality of the first parameters.

According to the eleventh aspect of the present invention, it becomes possible to more accurately control the valve overlap period so as to bring out more scavenging effect by taking into consideration the difference in the influence (contribution) on the change of the minimum value of exhaust pulsation between individual parameters within a plurality of the second parameters.

According to the twelfth aspect of the present invention, the pressure at a trough of exhaust pulsation associated with the change of each of the first parameters and the second parameters is estimated based on a relation which correlates each of the first parameters and the second parameters with a waveform of exhaust pulsation in advance, and thereafter the valve overlap period is controlled according to the estimation result. According to such technique as well, the control of the valve overlap period is differentiated between a case where the first parameter changes and a case where the second parameter changes. Thereby, it becomes possible to realize a control that achieves a scavenging effect more effectively.

According to the thirteenth aspect of the present invention, it becomes possible to satisfactorily suppress the deficiency of acceleration and the degradation of drivability in an internal combustion engine when a request for enlarging the exhaust system volume is issued while a scavenging effect is utilized.

According to the fourteenth aspect of the present invention, it is possible to suppress the supercharging delay that occurs when the exhaust system volume is enlarged, to a minimum.

According to the fifteenth aspect of the present invention, it becomes possible to bring out a scavenging effect more effectively by executing the valve overlap control of the present invention under a situation where the change of exhaust pulsation is likely to become the amplitude change.

### Brief Description of Drawings

Figure 1 is a diagram to illustrate the system configuration according to Embodiment 1 of the present invention;
Figure 2 is a diagram to show a cross section of one cylinder of a diesel engine in the system shown in Figure 1;
Figure 3 is a diagram to show the relation between an intake pressure and exhaust pressure and a crank angle during execution of volumetric efficiency improvement control;
Figure 4 is a diagram to illustrate two patterns A and B when exhaust pulsation changes in a direction in which the average value of exhaust pressure becomes higher;
Figure 5 is a flowchart of a routine that is executed in Embodiment 1 of the present invention;
Figure 6 is a time chart to illustrate a situation where scavenging effect can be effectively brought out by a control of a valve overlap period in Embodiment 1 of the present invention;
Figure 7 is a diagram to illustrate the contribution of each of first and second parameters to a increase of the minimum value of pressure at a trough of exhaust pulsation;
Figure 8 is a flowchart of a routine that is executed in Embodiment 2 of the present invention;
Figure 9 is a diagram to represent trends of experimental formulas (relational expressions) that are used to calculate the change of exhaust pulsation associated with the change of each of the first and second parameters;
Figure 10 is a flowchart of a routine that is executed in Embodiment 3 of the present invention;
Figure 11 is a diagram to illustrate an opening/closing region of a shut-off valve for adjusting an exhaust system volume;
Figure 12 is a diagram representing the change of waveform of exhaust pulsation associated with the opening and closing of the shut-off valve;
Figure 13 is a time chart to illustrate the outline of the control according to Embodiment 4 of the present invention;
Figure 14 is a flowchart of a routine that is executed in Embodiment 4 of the present invention;
Figure 15 is a diagram to illustrate the contribution of each of the first and second parameters with respect to an increase of the minimum value of pressure in a trough of exhaust pulsation in a state where the shut-off valve is opened; and
Figure 16 is a diagram to illustrate the merit of control B in which the utilization of scavenging effect is continued when the shut-off valve is opened, against control A in which the utilization of scavenging effect is given up and the VN opening is made an opening on the closing side when the shut-off valve is opened.

### Description of symbols

- 10: diesel engine
- 12: injector
- 18: exhaust manifold
- 20: exhaust passage
- 22: turbo supercharger
- 22a: turbine
- 22b: compressor
- 22c: variable nozzle
- 26: intake passage
- 32: intake manifold
- 36: airflow meter
- 42: shut-off valve
- 44: accelerator position sensor
- 46: intake pressure sensor
- 48: exhaust pressure sensor
- 50: ECU (Electronic Control Unit)
- 62: crank angle sensor
- 64: intake valve
- 66: intake variable valve operating mechanism
- 68: exhaust valve
- 70: exhaust variable valve operating mechanism
- 72: intake cam angle sensor
- 74: exhaust cam angle sensor

### Description of Embodiments

### Embodiment 1

### [System configuration of internal combustion engine]

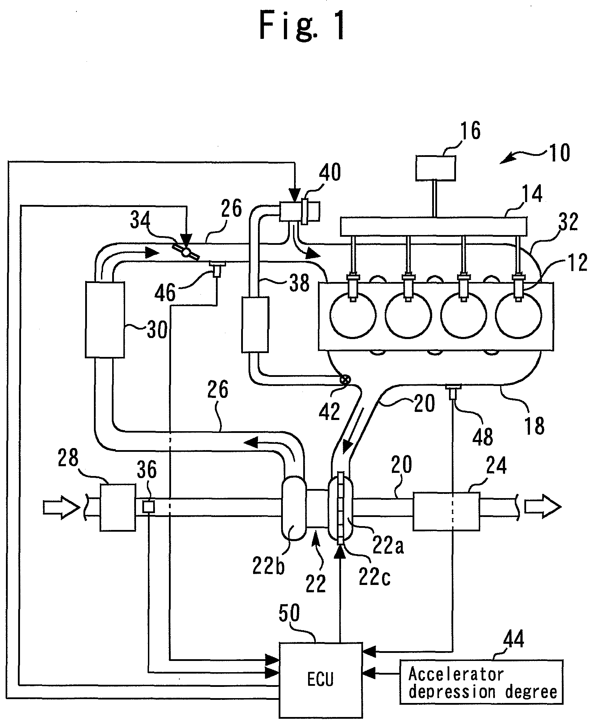

Figure 1 is a diagram to illustrate the system configuration according to Embodiment 1 of the present invention. The system shown in Figure 1 includes a 4-cycle diesel engine (compression ignited internal combustion engine) 10. It is supposed that the diesel engine 10 is mounted on a vehicle so as to work as its power source. Although the diesel engine 10 of the present embodiment is of an inline 4-cylinder type, the number and arrangement of cylinders of the diesel engine in the present invention is not limited to the foregoing.

An injector 12 that directly injects fuel into the cylinder is provided in each cylinder of the diesel engine 10. The injectors 12 of each cylinder are connected to a common common-rail 14. In the common-rail 14, high pressure fuel is stored which is pressurized by a supply pump 16. Then, from this common-rail 14, the fuel is supplied to the injector 12 of each cylinder. The exhaust gas discharged from each cylinder is collected by an exhaust manifold 18 to flow into an exhaust passage 20.

The diesel engine 10 includes a variable nozzle type turbosupercharger 22. The turbosupercharger 22 includes a turbine 22a which is activated by the exhaust energy of exhaust gas, and a compressor 22b which is integrally linked to the turbine 22a and is driven to rotate by the exhaust energy of the exhaust gas input to the turbine 22a. Further, the turbosupercharger 22 includes a variable nozzle (VN) 22c for adjusting the flow rate of the exhaust gas supplied to the turbine 22a.

The variable nozzle 22c can perform an opening and closing action by means of an actuator (for example, an electric motor) which is not shown. Decreasing the opening of the variable nozzle 22c reduces the inlet area of the turbine 22a, thereby allowing the flow speed of the exhaust gas, which is to be blown against the turbine 22a, to be increased. As a result, the rotational speed of the compressor 22b and turbine 22a (hereafter referred to as a "turbo rotational speed") increases, and thus the boost pressure can be increased. On the contrary, increasing the opening of the variable nozzle 22c increases the inlet area of the turbine 22a, thereby decreasing the flow speed of the exhaust gas to be blown against the turbine 22a. As a result, since the turbo rotational speed decreases, the boost pressure can be decreased.

The turbine 22a of the turbosupercharger 22 is disposed in the midway of the exhaust passage 20. An exhaust gas purifying apparatus 24 that purifies exhaust gas is provided in the exhaust passage 20 on the downstream side of the turbine 22a.

An air cleaner 28 is provided in the vicinity of an inlet of an intake passage 26 of the diesel engine 10. The air taken in through the air cleaner 28 is compressed by the compressor 22b of the turbosupercharger 22 and thereafter is cooled in an intercooler 30. The intake air which has passed through the intercooler 30 is distributed by an intake manifold 32 to flow into each cylinder.

An intake throttle valve 34 is installed in the intake passage 26 between the intercooler 30 and the intake manifold 32. Moreover, an airflow meter 36 for detecting an intake air quantity is installed near the downstream of the air cleaner 28 in the intake passage 26.

One end of an EGR passage 38 is connected to the intake passage 26 in the vicinity of the intake manifold 32. The other end of the EGR passage 38 is connected to the exhaust manifold 18 of the exhaust passage 20. An EGR valve 40 is provided in the midway of the EGR passage 38. By changing the opening of the EGR valve 40, it is possible to adjust the quantity of exhaust gas that passes through the EGR passage 38, that is, an external EGR gas quantity.

Further, a shut-off valve 42 for adjusting an exhaust system volume (more specifically, the exhaust system volume on the upstream side of the turbine 22a) is installed in a connection portion between the exhaust manifold 18 and the EGR passage 38. The shut-off valve 42 is configured to be able to shut off the EGR passage 38 on the upstream side of the EGR valve 40 (on the exhaust manifold 18 side).

In a state where the exhaust manifold 18 is shut off from the EGR passage 38 by such shut-off valve 42, since the volumes of the EGR passage 38 and the EGR cooler are not added to the exhaust system volume, it is possible to reduce the exhaust system volume by an amount of combined volume of the EGR passage 38 and the EGR cooler compared with while the valve is open. Thus, according to the shut-off valve 42, it is possible to make the exhaust system volume variable.

Further, the system of the present embodiment further includes an accelerator position sensor 44 for detecting a depression amount of an accelerator pedal of a vehicle equipped with the diesel engine 10, an intake pressure sensor 46 for detecting intake pressure (boost pressure), an exhaust pressure sensor 48 for detecting exhaust pressure, and an ECU (Electronic Control Unit) 50. The ECU 50 is connected with the above-described various sensors and actuators. Based on the output of each sensor, the ECU 50 controls the operational state of the diesel engine 10 by activating each actuator according a predetermined program.

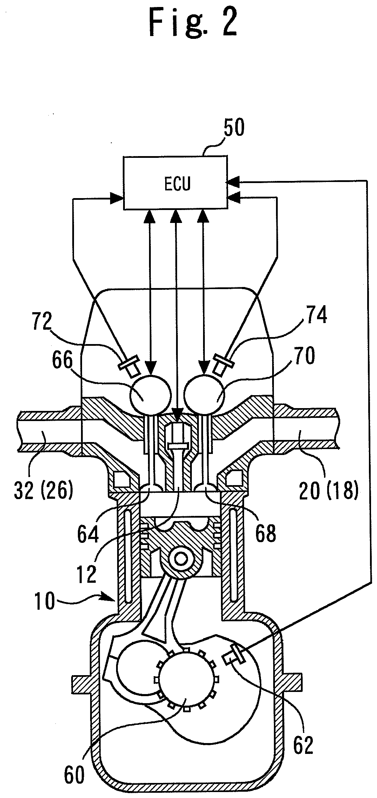

Figure 2 is a diagram to show a cross section of one cylinder of the diesel engine 10 in the system shown in Figure 1. Hereafter, the diesel engine 10 will be further described. As shown in Figure 2, a crank angle sensor 62 for detecting a rotational angle of a crankshaft 60, that is, a crank angle, is attached in the vicinity of the crankshaft 60 of the diesel engine 10. This crank angle sensor 62 is connected to the ECU 50. The ECU 50 is also able to calculate an engine rotational speed based on the detection signal of the crank angle sensor 62.

Moreover, the diesel engine 10 includes an intake variable valve operating mechanism 66 for making a valve opening characteristic of the intake valve 64 variable, and an exhaust variable valve operating mechanism 70 for making a valve opening characteristic of the exhaust valve 68 variable. Specific configurations of the intake variable valve operating mechanism 66 and the exhaust variable valve operating mechanism 70 are not particularly limited, and besides a phase variable mechanism for making the opening and closing timing continuously variable by changing the phase of the camshaft, a mechanism for driving a cam by an electric motor, an electromagnetically driven valve, or the like may be used.

Furthermore, in the vicinities of an intake camshaft and an exhaust camshaft, an intake cam angle sensor 72 and an exhaust cam angle sensor 74 for detecting a rotational angle of each of the camshafts, that is, an intake cam angle and an exhaust cam angle are disposed, respectively. These sensors 72 and 74 are connected to the ECU 50. The ECU 50 is also able to calculate advance angle quantities of the opening and closing timings of the intake valve 64 and the exhaust valve 68 based on the detection signals of these sensors 72 and 74.

According to the intake variable valve operating mechanism 66 and the exhaust variable valve operating mechanism 70, it is possible to change the length of a valve overlap period in which the valve open period of the exhaust valve 68 and the valve open period of the intake valve 64 overlap with each other (hereafter, simply referred to as a "valve overlap period" or "O/L period")

### [Volumetric efficiency improvement control for improving volumetric efficiency by scavenging effect utilizing exhaust pulsation]

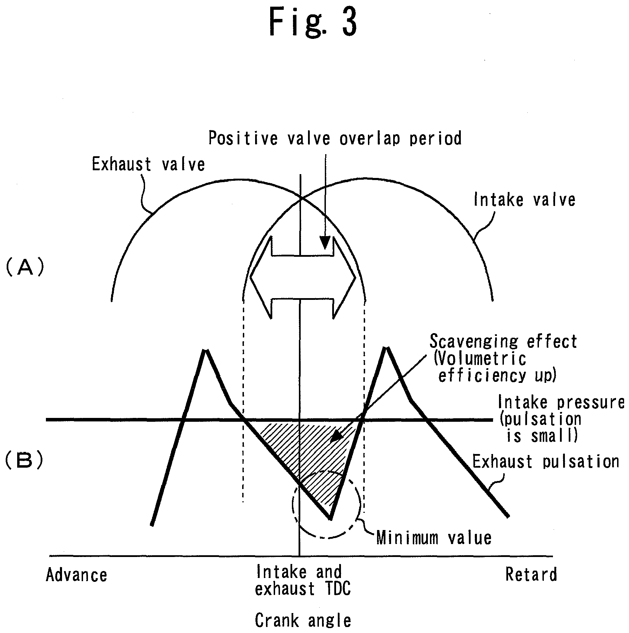

Figure 3 is a diagram to show the relation between the intake pressure and exhaust pressure and the crank angle during the execution of the volumetric efficiency improvement control.

As shown in Figure 3, the intake pressure shows a small pulsation and stays substantially constant regardless of the crank angle. In contrast to this, the exhaust pressure shows a large pulsation (periodically varies) as exhaust gas is intermittently discharged from the exhaust valve 68 of each cylinder.

The waveform shown in Figure 3 shows a state where a positive valve overlap period (O/L period) is set so as to coincide with a timing at which the pulsation of exhaust pressure (hereafter, "exhaust pulsation") exhibits a trough. Moreover, the waveform shown in Figure 3 shows a state where the intake pressure (boost pressure) is increased with respect to the exhaust pressure by a supercharging at a good turbocharging efficiency. In such a state, a region represented by a hatch pattern in Figure 3, that is, a region in which intake pressure is higher than exhaust pressure in the valve overlap period is sufficiently secured. As a result of that, it becomes easier for fresh air to flow into the cylinder, and it becomes possible to sufficiently achieve an effect of causing the burnt gas in the cylinder to be swiftly expelled into an exhaust port with the fresh air that has flown in (so called, a scavenging effect).

The scavenging effect as described above becomes larger as the region shown by the hatch pattern in Figure 3 becomes larger. Therefore, performing the adjustment of the valve overlap period based on the adjustment of the opening timing of the intake valve by use of the intake variable valve operating mechanism 66, and the adjustment of the closing timing of the exhaust valve by use of the exhaust variable valve operating mechanism 70 so as to secure a large region enables to sufficiently achieve a scavenging effect. Thus, by performing the volumetric efficiency improvement control that utilizes a scavenging effect, it is made possible to sufficiently reduce the residual gas quantity and, for that part, increase the quantity of fresh air to be charged into the cylinder. That is, it is possible to increase a volumetric efficiency ηV of intake air. As a result, it is possible to satisfactorily increase the torque of the diesel engine 10. Further, as described above, the scavenging effect becomes larger as the above-described region becomes larger, that is, the minimum value of pressure at a trough of exhaust pulsation becomes lower. Therefore, to enhance the scavenging effect, it is important that the minimum value can be accurately estimated.

### [Characteristic features of Embodiment 1]

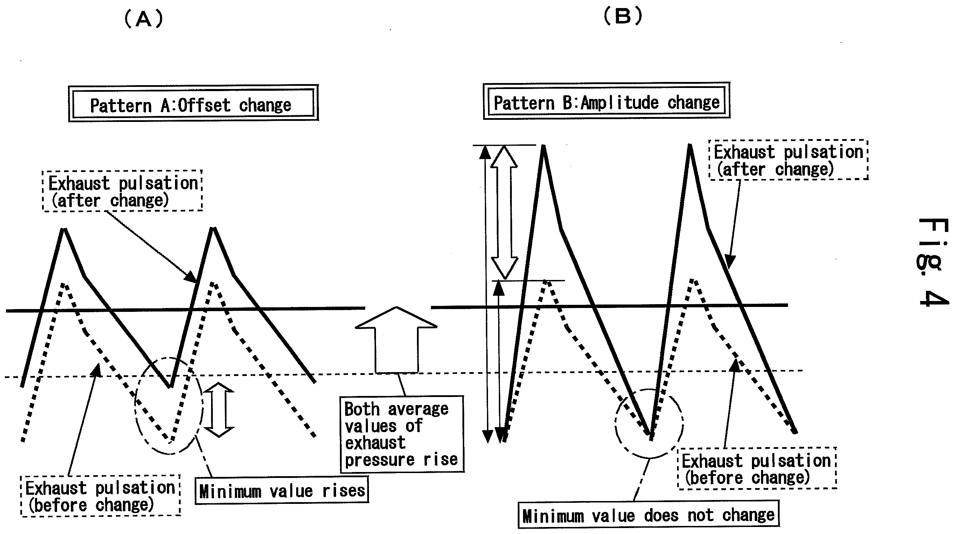

Figure 4 is a diagram to illustrate two patterns A and B when the exhaust pulsation changes in a direction in which the average value of exhaust pressure becomes higher. It is noted that in Figure 4, the waveform shown by a thin line indicates an exhaust pulsation before change, and the waveform shown by a solid line indicates an exhaust pulsation after change.

The first pattern A is an offset change in which the exhaust pulsation entirely changes in the direction in which exhaust pressure becomes higher. In this case, the minimum value of the pressure at a tough of the exhaust pulsation, which is important for increasing scavenging effect, increases. Another pattern B is an amplitude change in which the amplitude of exhaust pulsation changes more greatly than the minimum value of the pressure at a trough of exhaust pulsation as shown in Figure 4(B). In such a case, the above-described minimum value of exhaust pulsation does not change so much, and the amplitude of exhaust pulsation becomes large. Figure 4(B) shows an example in which the above-described minimum value has not changed.

While the average value of exhaust pressure increases in either of the two patterns A and B as described above; in the case of the offset change, the above-described minimum value of exhaust pulsation increases, and in the case of the amplitude change, the above-described minimum value of exhaust pulsation does not change so much. As already described, as the minimum value of the pressure in a trough of exhaust pulsation becomes lower, it becomes possible to secure a larger pressure difference between intake pressure and exhaust pressure so that the scavenging effect becomes larger. However, in a conventional internal combustion engine, it is general that the exhaust pressure is acquired as an average value by a technique such as estimation, the valve overlap period is controlled to be shorter based on the judgment that the scavenging effect decreases when the average value increases. In such a conventional control, when the change of exhaust pulsation is the above-described offset change, it can be said that controlling the valve overlap period to be shorter is appropriate, since the above-described minimum value of exhaust pulsation rises. However, the change of exhaust pulsation is the above-described amplitude change, it cannot be said that controlling the valve overlap period to be shorter based on the judgment that the scavenging effect decreases is appropriate, since the above-described minimum value of exhaust pulsation does not change so much.

As described so far, there exist two patterns A and B, that is, the above-described offset change and the above-described amplitude change, which relate to different phenomena in the change of exhaust pulsation. Therefore, unless control based on a different principle is performed for each of these two patterns A and B, it is not possible to bring out a sufficient scavenging effect. Nevertheless, in a conventional control, neither the identification of both the changes is performed, nor parameters (factors) to identify both the changes in terms of physical phenomenon are established. Accordingly, in the present embodiment, the two changes, that is, the above-described offset change and the above-described amplitude change are prescribed as described below, and the first parameter and the second parameter which become the causing factor of each change are established.

That is, in the present embodiment, the offset change shown in Figure 4(A) is prescribed as a change that occurs mainly in association with changes of the exhaust passage area and the flow rate of exhaust gas that flows through the exhaust manifold 18. Then, it is supposed that the first parameter which becomes a causing factor to cause such offset change includes a boost pressure, a controlled quantity of opening of the variable nozzle 22c (hereafter, abbreviated as "VN opening") to the closing side, and an intake air quantity (can be substituted by the detection of boost pressure). As these first parameters become large, the exhaust pressure becomes high. To be more specific, when boost pressure becomes high, the intake air quantity increases, thereby causing the exhaust gas flow rate that flow through the exhaust manifold 18 to increase, and the exhaust pressure becomes high. If the controlled quantity of VN opening to the closing side increases (that is, the variable nozzle 22c is throttled), the exhaust passage area becomes narrower, and the exhaust pressure becomes higher.

Moreover, in the present embodiment, it is prescribed that the amplitude change shown in Figure 4(B) is a change that occurs mainly in association with a change of the energy of exhaust gas when the exhaust valve 68 is opened. Moreover, it is supposed that the parameter that becomes a causing factor to cause such amplitude change includes a fuel injection quantity, a retard angle quantity of fuel injection timing, an advance angle quantity of opening timing of the exhaust valve 68, and a controlled quantity of closing timing of the intake valve 64 toward the intake bottom dead center. When such second parameter becomes larger, the exhaust pressure becomes higher. To be more specific, when the fuel injection quantity increases, the pressure inside the cylinder rises, the pressure of exhaust gas when the exhaust valve 68 opens rises, and exhaust pressure (in the exhaust manifold 18) becomes higher. When the retard angle quantity of fuel injection timing increases, the timing at which combustion occurs is retarded, the pressure of exhaust gas when the exhaust valve 68 opens rises, and the exhaust pressure becomes higher. When the advance angle quantity of opening timing of the exhaust valve 68 increases, the exhaust valve 68 opens in a state where the pressure inside the cylinder is higher so that the pressure of exhaust gas when the exhaust valve 68 opens rises, and the exhaust pressure becomes higher. Further, if the controlled quantity of closing timing of the intake valve 64 toward the intake bottom dead center becomes larger (that is, the closing timing of the intake valve 64 is brought closer to the intake bottom dead center), actual compression ratio becomes higher and the pressure and the temperature at the compression end rise. As a result, the pressure of exhaust gas when the exhaust valve 68 opens rises, and the exhaust pressure becomes higher.

In addition to that, in the present embodiment, when it is judged that an increasing factor of exhaust-pressure has occurred based on the changes (increases) of these first and second parameters, the control of the valve overlap period is differentiated according to whether the change of exhaust pulsation is the above-described offset change, or the above-described amplitude change.

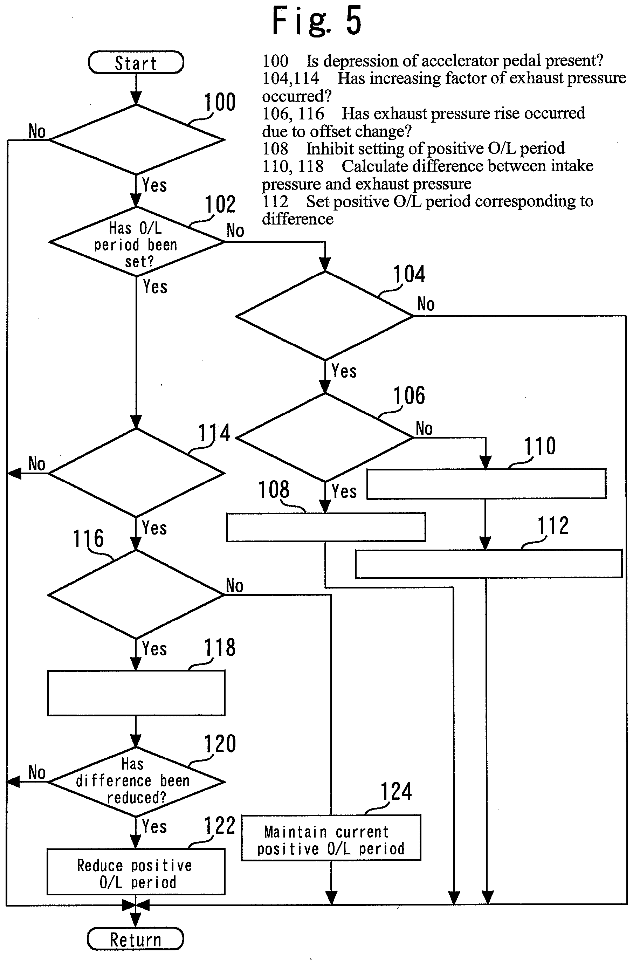

Figure 5 is a flowchart to show a control routine to be executed by the ECU 50 in Embodiment 1 of the present invention.

In the routine shown in Figure 5, first, it is discriminated whether a depression of the accelerator pedal is present or absent by utilizing the output of the accelerator position sensor 44 (step 100). As a result, when a depression of the accelerator pedal is detected, it is discriminated whether or not the valve overlap period (O/L) for utilizing a scavenging effect has been set (step 102).

If it is determined in step 102 that the O/L has not been set, next, it is discriminated whether or not an increasing factor of exhaust pressure has occurred (step 104). To be specific, it is discriminated whether or not the above-described first or second parameter has changed in an increasing direction based on information of output changes of various sensors and controlled values of various actuators. In this case, for example, it is discriminated whether or not the opening of the variable nozzle 22c is controlled to the closing side, or whether or not the fuel injection quantity is increased.

When the occurrence of an increasing factor of exhaust pressure has been recognized in step 104, it is discriminated whether or not the rise of exhaust pressure is caused by an offset change of exhaust pulsation (step 106). To be specific, in present step 106, it is determined that a rise of exhaust pressure due to an offset change of exhaust pulsation has occurred when an increase of any of the first parameters (boost pressure, VN opening, etc.) is detected, and it is determined that a rise of exhaust pressure due to an amplitude change of exhaust pulsation has occurred when an increase of any of the second parameters (fuel injection quantity, fuel injection timing, etc.) is detected.

When it is determined to be the case where a rise of exhaust pressure due to the offset change occurs in step 106, setting of a positive O/L period is inhibited (step 108). This causes a state where the O/L period has not been set (including a state where it can be said that the O/L period has not substantially been set since the O/L period is very small) to be maintained. On the other hand, when the determination of step 106 is negative, that is, when it is determined to be the case where a rise of exhaust pressure due to an amplitude change occurs, the difference between the intake pressure (boost pressure) and the exhaust pressure is calculated (step 110), and thereafter a positive O/L period corresponding to the difference is set (step 112). To be specific, control is performed such that as the difference is larger, the positive O/L period becomes longer.

On the other hand, when it is determined that the O/L period has been set in step 102, it is also discriminated whether or not an increasing factor of exhaust pressure has occurred, by a similar processing to that in step 104 (step 114). When, as a result, the occurrence of an increasing factor of exhaust pressure is recognized, it is discriminated whether or not the rise of exhaust pressure is caused by the offset change of exhaust pulsation, by a similar processing to that in step 106 (step 116).

When it is determined to be the case where a rise of exhaust pressure due to the offset change occurs in step 116, the difference between the intake pressure (boost pressure) and the exhaust pressure is calculated (step 118), and thereafter it is discriminated whether or not the difference has been reduced with respect to a predetermined threshold (step 120). When, as a result, it is determined that the above-described difference has been reduced with respect to the above-described threshold, that is, when it can be judged that an effective scavenging effect cannot be obtained at the current O/L period, control is performed such that the positive O/L period becomes shorter (step 122). It is noted that in present step 122, control may be performed such that the O/L period is eliminated depending on the degree of reduction of the above-described difference.

On the other hand, when the determination of step 116 is negative, that is, it is determined to be the case where a rise of exhaust pressure due to an amplitude change occurs, the current O/L period is maintained (step 124). It is noted that, in present step 124, the positive O/L period may be expanded in the case where the minimum value of the pressure of exhaust pulsation becomes lower due to an amplitude change.

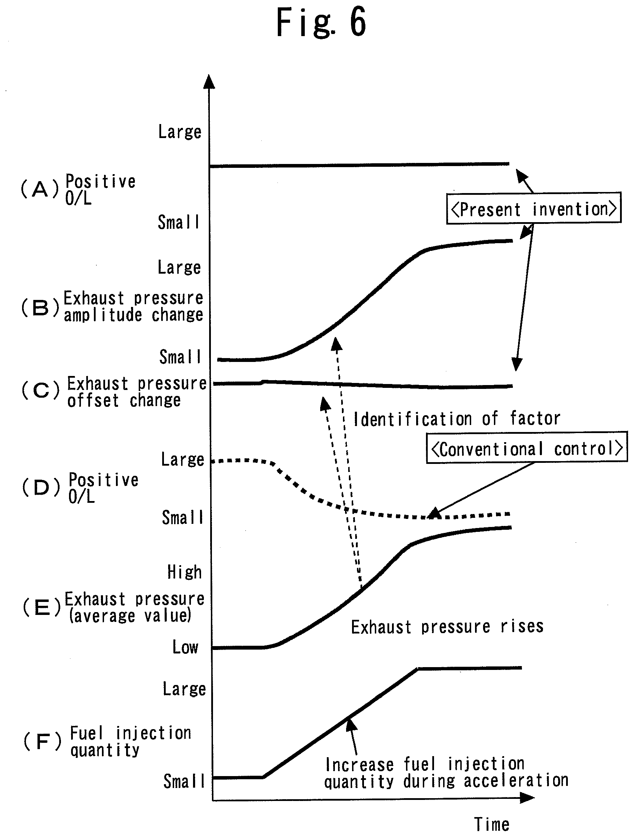

Figure 6 is a time chart to illustrate a situation where scavenging effect can be effectively brought out by the control of the valve overlap period in Embodiment 1 of the present invention.

The time chart shown in Figure 6 shows the situation where the fuel injection quantity is increased, as an example of increase of the above-described parameter, during acceleration associated with a depression of the accelerator pedal as shown in Figure 6(F). When the fuel injection quantity increases, (an average value of) the exhaust pressure rises as shown in Figure 6(E). In such a case, in the conventional control which has been already described, it is judged that the scavenging effect cannot be utilized effectively, and the positive O/L period is uniformly reduced as shown in Figure 6(D).

In contrast to this, according to the processing of the routine shown in Figure 5 which has been described so far, when a rise of exhaust pressure occurs, the identification of the increasing factor of exhaust pressure is performed. Then, according to whether the change of exhaust pulsation is an offset change or an amplitude change, the control of the valve overlap period is differentiated. To be specific, when it is determined that the change of exhaust pulsation is not an offset change but an amplitude change as shown in Figures 6(B) and 6(C), and if the O/L period has been set, the setting of the positive O/L period is maintained as shown in Figure 6(A). As a result of this, it becomes possible to utilize scavenging effect in the situation (under an amplitude change) where there is actually no need of suppressing the setting of positive O/L period even if exhaust pressure rises. Thus, according to the processing as described so far, it becomes possible to bring out a scavenging effect more effectively compared with the conventional control described above.

Further, in the above-described routine, the above-described control of the valve overlap period is executed when a depression of the accelerator pedal is detected. When a depression of the accelerator pedal is detected (to be more specific, in an early period of acceleration after the accelerator pedal is depressed), although the fuel injection quantity is increased to generate a required torque, the boost pressure does not increase immediately, because there is a supercharging delay. In such a period, that is, a period in which the boost pressure which is a first parameter does not increase and the fuel injection quantity which is a second parameter increases, the change of exhaust pulsation becomes the above-described amplitude change. Therefore, by performing the control of the valve overlap period of the present embodiment at the time of the depression of the accelerator pedal (particularly, in an early period of acceleration), it becomes possible to bring out a scavenging effect more effectively in the period in which the above-described conventional control cannot utilize it.

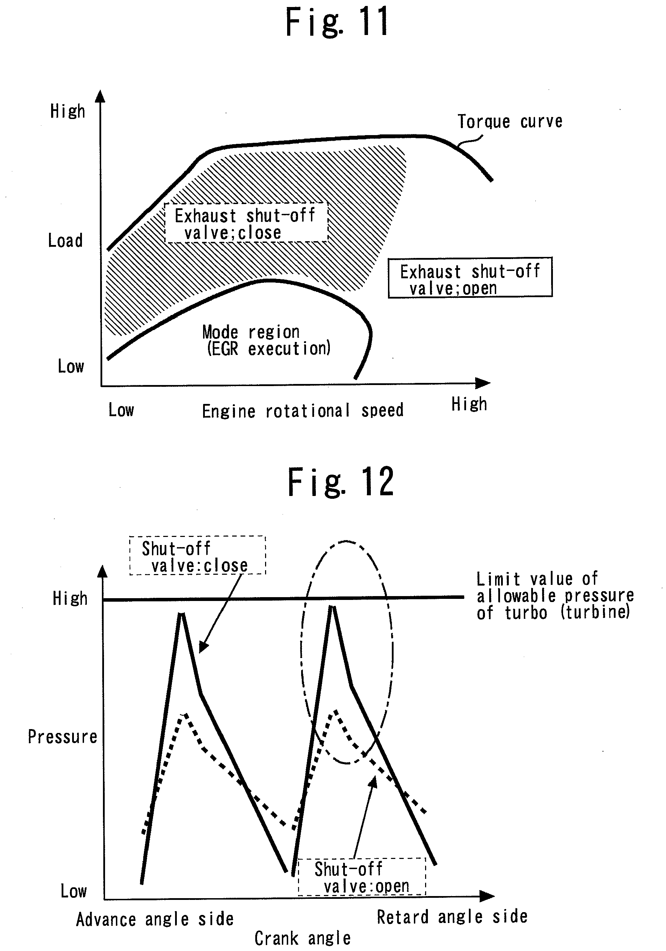

Moreover, as will be described later with reference to Figure 11, an operational region on the low-speed and low-load side of the diesel engine 10 is supposed to be a mode region which is accompanied by the execution of EGR control for improving the exhaust emission performance. The operational region (region of high-speed and high-load side) may be shifted to a region out of the mode region as the result of the accelerator pedal being depressed under a situation where the operational region of the diesel engine 10 is in the above-described mode region. Even in such a case, the fuel injection quantity is increased in association with a depression of the accelerator pedal. Further, in this case, since an after-injection, which has been performed to suppress smoke emission within the mode region, becomes not to be performed, the energy of exhaust gas which is supplied to a turbine 22a decreases. As a result of that, stopping the after injection results in that the turbo rotational speed becomes less likely to be increased, and the start-up of the boost pressure is more likely to be delayed even though the fuel injection quantity is increased. Therefore, by performing the control of the valve overlap period of the present embodiment at the time of such depression of the accelerator pedal (when moving out of the mode region), it becomes possible to bring out a scavenging effect more effectively during a period in which the above-described conventional control cannot take advantage thereof.

It is noted that, in Embodiment 1 described above, the "overlap period control means" according to the above-described first aspect of the present invention is implemented by the ECU 50 executing a series of processing of the routine shown in Figure 5.

Moreover, the "pulsation-change mode discrimination means" according to the above-described fourth aspect of the present invention is implemented by the ECU 50 executing the processing of step 106 or 116.

Further, the "parameter change detection means" according to the above-described seventh aspect of the present invention is implemented by the ECU 50 executing the processing of step 106 or 116.

Furthermore, the "accelerator depression detection means" according to the above-described fifteenth aspect of the present invention is implemented by the ECU 50 executing the processing of step 100.

### Embodiment 2

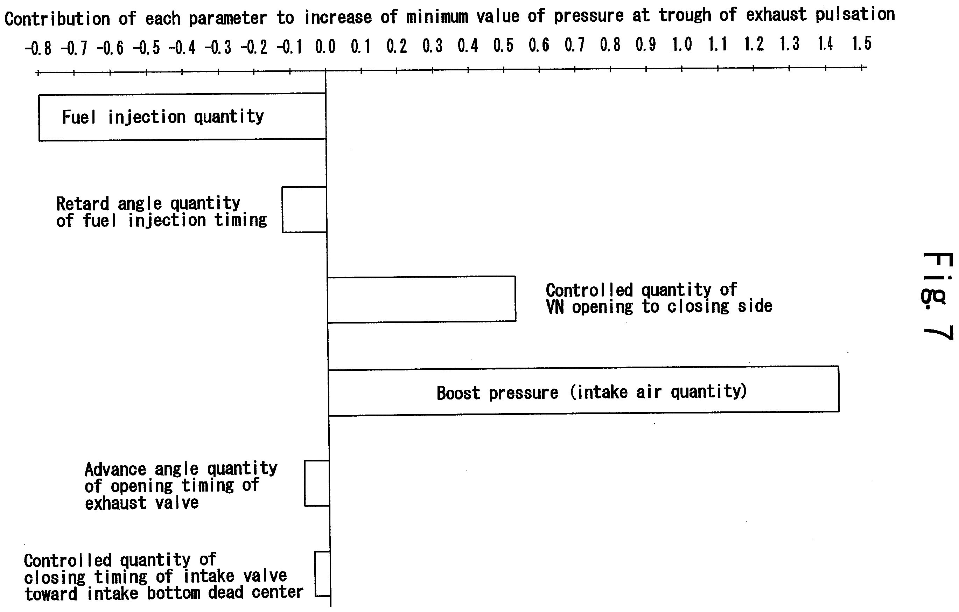

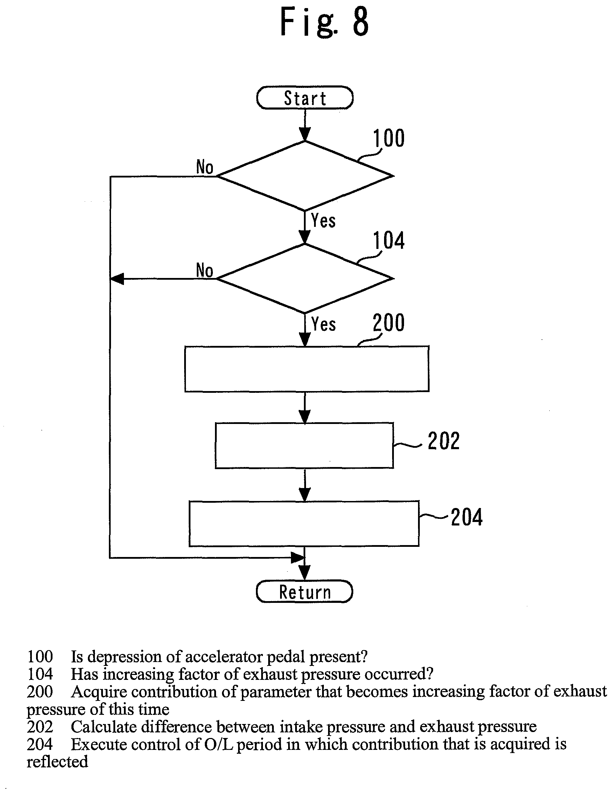

Next, Embodiment 2 of the present invention will be described with reference to Figures 7 and 8.

The system of the present embodiment can be implemented by using the hardware configuration shown in Figures 1 and 2 and making the ECU 50 execute the routine shown in Figure 8 described below, in place of the routine shown in Figure 5.

Figure 7 is a diagram to illustrate the contribution of each of the first and second parameters to the increase of the minimum value of pressure at a trough of exhaust pulsation.

The contribution of each parameter shown in Figure 7 is a value obtained as a standard regression coefficient by a multiple regression analysis. The above-described first and second parameters include parameters that influence with each other. For example, when the VN opening is controlled to the closing side, while the exhaust pressure rises, the turbo rotational speed becomes higher so that the boost pressure may become higher. According to such setting of contribution, it is possible to grasp to what extent each parameter exerts influence on the rise of the above-described minimum value of exhaust pulsation, including interactions between such parameters.

In the relation shown in Figure 7, for the boost pressure (and intake air quantity) and the controlled quantity of VN opening to the closing side, which fit into the above-described first parameter, the contributions thereof are set so as to be values on the plus side. An increase of the contribution to the plus side means that an increase of the first parameter causes the above-described minimum value of exhaust pulsation to rise further. Moreover, setting is made such that the contribution of the boost pressure is a little over twice the contribution of the controlled quantity of VN opening. This shows that when the boost pressure is increased by a predetermined amount, the degree of increase of the above-described minimum value is a little over twice compared with a case where the above-described controlled quantity of VN opening is increased by a predetermined amount.

Moreover, in the relation shown in Figure 7, for the fuel injection quantity, the retard angle quantity of fuel injection timing, the advance angle quantity of opening timing of the exhaust valve 68, and the controlled quantity of closing timing of the intake valve 64 toward the intake bottom dead center, which fit into the above-described second parameter, the contributions are set to be values on the minus side. An increase of the contribution to the minus side means that the above-described minimum value of exhaust pulsation further declines due to an increase of the second parameter. Moreover, the setting of the relative relation of the magnitude of contribution for these four parameters on the minus side is as shown in Figure 7.

In the present embodiment, it is arranged such that the contribution of each parameter which is set as described above is reflected to the adjustment of the controlled quantity of valve overlap period when an increasing factor of exhaust pressure has occurred. Hereafter, one example of concrete processing will be described with reference to the routine shown in Figure 8.

Figure 8 is a flowchart to show a control routine to be executed by the ECU 50 to realize the control of the valve overlap period in Embodiment 2 of the present invention. It is noted that, in Figure 8, steps that are the same as steps in the flowchart illustrated in Figure 5 according to Embodiment 1 are denoted by the same reference numbers, and a description of those steps is omitted or simplified below.

In the routine shown in Figure 8, in the case where a depression of the accelerator pedal is detected (step 100), if it is determined that an increasing factor of exhaust pressure has occurred (step 104), next, the contribution of the parameter that becomes the increasing factor of exhaust pressure of this time is acquired (step 200). The ECU 50 stores the contributions, which are determined in a relation as shown in Figure 7, for each of the first and second parameters, and here the stored value of the contribution of the parameter is acquired.

Next, based on the acquired contribution in step 200, the above-described minimum value of exhaust pulsation which has changed in association with an increase of the parameter which becomes the increasing factor of exhaust pressure of this time is calculated (estimated), and thereafter a difference between the intake pressure (boost pressure) and the calculated value of the minimum value is calculated (step 202). The contribution prescribed in the present embodiment is a degree to indicate the degree of increase of the minimum value of exhaust pulsation when a corresponding parameter has increased by a predetermined amount. Therefore, if an increase amount of the parameter that becomes the increasing factor of exhaust pressure of this time and the contribution of the parameter are known, it is possible to calculate the above-described minimum value of exhaust pulsation based on the rise amount of the above-described minimum value obtained from the product of the foregoing two terms, and a predetermined reference waveform of exhaust pulsation stored in the ECU 50. Moreover, the difference calculated in present step 202 is used in next step 204 when a positive O/L period is determined.

Next, the control of O/L period, in which the contribution acquired in step 200 is reflected, is executed (step 204). To be specific, when the O/L period has been already set, control is performed such that as the acquired contribution becomes larger on the plus side, the O/L period becomes shorter, and that as the acquired contribution becomes larger on the minus side, the O/L period becomes longer. Further, when the O/L period has not been set at the current time, control is performed such that if the acquired contribution is a value on the plus side, the setting of O/L period is inhibited, and that as the acquired contribution becomes larger on the minus side, a longer O/L period is set.

According to the routine shown in Figure 8 described so far, an adjustment amount of valve overlap period when an increasing factor of exhaust pressure has occurred is changed in a feed forward manner according to the direction and magnitude of the sign of the contribution of the parameter that becomes the increasing factor of exhaust pressure. As already described with reference to Figure 7, each of the first parameters that exert influence that makes the change of exhaust pulsation become an offset change is set such that the contribution thereof is a value on the plus side, and each of the second parameters that exert influence that makes the change of exhaust pulsation become an amplitude change is set such that the contribution thereof is a value on the minus side. That is, by performing the control of the valve overlap period with the contribution of each parameter being reflected in the processing of the routine shown in Figure 8 as well, differentiation of the control of the valve overlap period between the case where the change of exhaust pulsation is an offset change and the case where that is an amplitude change is realized as in Embodiment 1 described above. Thus, the processing of the above-described routine as well makes it possible to utilize a scavenging effect under the situation (under an amplitude change) where there is actually no need of suppressing the setting of positive O/L period even if exhaust pressure rises. Therefore, the control of the present embodiment also makes it possible to bring out a scavenging effect more effectively compared with the above-described conventional control.

Further, in the present embodiment, regarding the first parameters, the magnitude of contribution is set for each parameter on the plus side, and regarding the second parameters, the magnitude of contribution is set for each parameter on the minus side as shown Figure 7. As a result of this, when the occurrence of an increasing factor of exhaust pressure is recognized, the controlled quantity of valve overlap period becomes to be adjusted not only by switching the control of the valve overlap period according to whether the change of exhaust pulsation is an offset change or an amplitude change, but also according to the magnitude on the plus side or the minus side of the contribution of the parameter that becomes the increasing factor of exhaust pressure of this time (that is, the magnitude of influence on the change of the minimum value of exhaust pulsation). To be more specific, as the contribution becomes larger, the controlled quantity of O/L period is adjusted by a larger amount. Thus, when a rise of exhaust pressure is recognized, it becomes possible to more accurately control valve overlap period so as to bring out more scavenging effect compared with Embodiment 1 described above.

By the way, in Embodiment 2 described above, by performing the control of the valve overlap period with the contribution of each parameter being reflected, the control of the valve overlap period is differentiated between the case where the change of exhaust pulsation is an offset change and the case where that is an amplitude change. However, the control of the valve overlap period in the present invention is not limited to such technique, and for example, when an exhaust pressure sensor that can detect a detailed waveform of exhaust pulsation is provided, the control as described below may be performed. That is, first, utilizing a minimum value of exhaust pulsation detected by the exhaust pressure sensor, a difference with the intake pressure is acquired. Then, when thereafter the first or second parameter increases by a certain amount, the above-described difference after the change of the parameter is estimated by estimating the change of the minimum value of exhaust pulsation by using the change amount of the parameter that has changed and the above-described contribution of the parameter. Then, the valve overlap period is controlled in a feed forward manner so as to become a period in accordance with the estimated difference. According to such control, the above-described difference of current time can be grasped by the above-described exhaust pressure sensor, and it becomes therefore possible to accurately obtain a control reference value in performing the control of the valve overlap period in a feed forward manner according to the change of the first or second parameter. Then, it becomes possible to accurately distinguish the controlled quantity of valve overlap period according to an increasing factor of exhaust pressure (the first or second parameter) for each of the increasing factors (for each of the parameters).

Further, when an exhaust pressure sensor that can detect detailed waveforms of exhaust pulsation is provided, for example, it is judged whether a change of exhaust pulsation is the above-described offset change, or the above-described amplitude change by referring to the waveform of exhaust pulsation obtained by the exhaust pressure sensor, and according to the judgment result, the control of the valve overlap period may be differentiated.

It is noted that in Embodiment 2 described above, the "overlap period control means" according to the above-described first aspect of the present invention is implemented by the ECU executing a series of processing of the routine shown in Figure 8.

### Embodiment 3

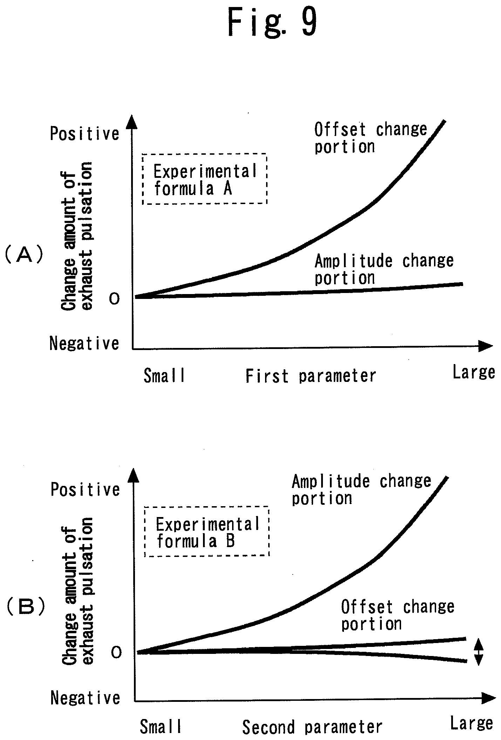

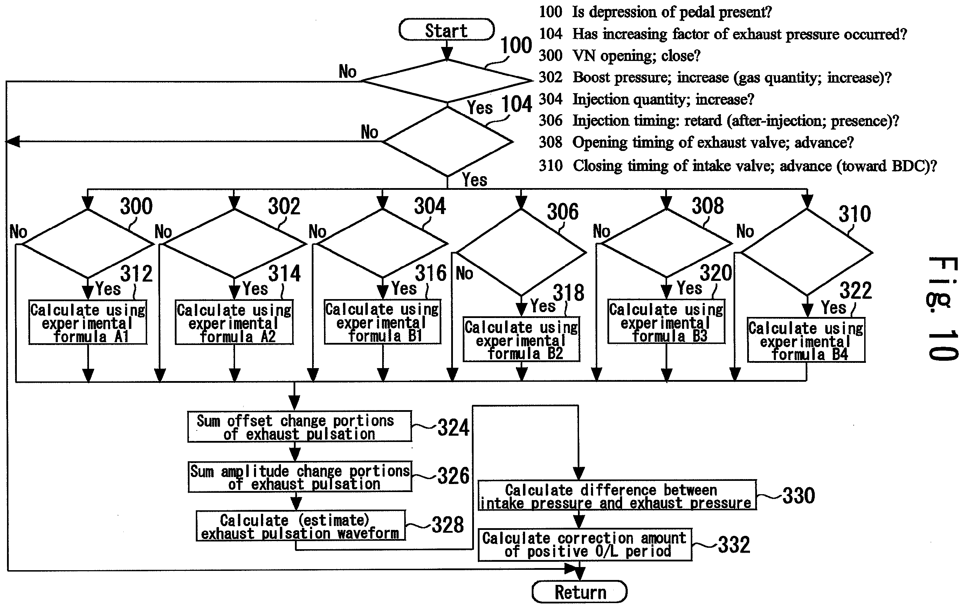

Next, Embodiment 3 of the present invention will be described with reference to Figures 9 and 10.

The system of the present embodiment can be implemented by using the hardware configuration shown in Figures 1 and 2 and making the ECU 50 execute the routine shown in Figure 10 described below in place of the routine shown in Figure 5.

Figure 9 is a diagram to represent the trends of experimental formulas (relational expressions) that are used to calculate the change of exhaust pulsation associated with the change of each of the first and second parameters. To be more specific, Figure 9(A) shows the trend of the experimental formula A which prescribes the change of exhaust pulsation with respect to the first parameter that becomes the causing factor to cause the above-described offset change to occur, and Figure 9(B) shows the trend of the experimental formula B which prescribes the change of exhaust pulsation with respect to the change of the second parameter that becomes the causing factor to cause the above-described amplitude change to occur.

As shown in Figure 9(A), the experimental formula A is prescribed such that as the first parameter becomes larger (that is, the change amount of the first parameter in the increasing direction of exhaust pressure becomes larger), the offset change portion in the change amount of exhaust pulsation becomes larger. Moreover, the experimental formula A is prescribed such that the amplitude change portion in the change amount of exhaust pulsation does not change so much according to an increase/decrease of the value of the first parameter. Such trend of the experimental formula A captures the trend of offset change shown in Figure 4(A). Further, as already described in Embodiment 2, the contribution to the change of exhaust pulsation is differentiated between parameters (for example, the boost pressure and the VN opening) within the first parameter. Therefore, the experimental formula A relating to the first parameter is prescribed in a strict sense such that the degree of the change of exhaust pulsation according to an increase or decrease of the value of the parameter is differentiated according to whether the parameter is the boost pressure or the VN opening.

On the other hand, as shown in Figure 9(B), the experimental formula B is prescribed such that as the second parameter becomes larger (that is, the change amount of the second parameter in the increasing direction of exhaust pressure becomes larger), the amplitude change portion in the change amount of exhaust pulsation becomes larger. Moreover, the experimental formula B is prescribed such that while the second parameter becomes larger, the offset change portion in the change amount of exhaust pulsation remains to be the same or becomes larger to the minus side. Such trend of the experimental formula B captures the trend of amplitude change shown in Figure 4(B). Further, the experimental formula B relating to the second parameter is also prescribed in a strict sense such that as with the first parameter, the degree of the change of exhaust pulsation according to an increase or decrease of the value of the parameter is differentiated between parameters (for example, the fuel injection amount and the fuel injection timing) within the second parameters.

In the present embodiment, the trends (relation) of the change of exhaust pulsation with respect to the change of each of the first and second parameters are prescribed by using experimental formulas such as above-described experimental formulas A and B, and thereafter the change of exhaust pulsation accompanied by the change of each parameter during operation of the diesel engine 10 is calculated for each parameter. Then, it is arranged such that the valve overlap period is controlled based on the waveform (particularly, a minimum value of pressure in a trough) of exhaust pulsation obtained by summing the change portions of exhaust pulsation for each parameter, which are calculated (estimated) in that way.

Figure 10 is a flowchart to show the control routine to be executed by the ECU 50 in present Embodiment 3 to implement the functions described above. It is noted that in Figure 10, steps that are the same as steps in the flowchart illustrated in Figure 5 according to Embodiment 1 are denoted by the same reference numbers, and a description of those steps is omitted or simplified below.

In the routine shown in Figure 10, in the case where a depression of the accelerator pedal has been detected (step 100), when it is determined that an increasing factor of exhaust pressure has occurred (step 104), next, discrimination processes of steps 300 to 310 are executed, respectively. Any of the processing of these steps is the process to discriminate whether or not the first parameter or the second parameter has become large.

To be specific, in step 300, it is discriminated whether or not the VN opening is controlled to the closing side (the controlled quantity of VN opening to the closing side has increased). In step 302, it is discriminated whether or not the boost pressure (intake air quantity) has increased. In step 304, it is discriminated whether or not fuel injection quantity has increased. In step 306, it is discriminated whether or not the retard angle quantity of fuel injection timing has increased (for example, an after-injection has been performed after a main injection). In step 308, it is discriminated whether or not the advance angle quantity of opening timing of the exhaust valve 68 has increased. In step 310, it is discriminated whether or not the controlled quantity of closing timing of the intake valve 64 toward the intake bottom dead center has increased.

When it is determined in step 300 that the controlled quantity of VN opening to the closing side has increased, an offset change portion and an amplitude change portion of the exhaust pulsation with respect to the change of the above-described controlled quantity of VN opening are calculated by using an experimental formula A1 (an experimental formula having such a trend as that of the experimental formula A shown in Figure 9) which prescribes the change of exhaust pulsation with respect to the change of the above-described controlled quantity of VN opening (step 312).

When it is determined in step 302 that the boost pressure has increased, an offset change portion and an amplitude change portion of exhaust pulsation with respect to the change of boost pressure are calculated by using an experimental formula A2 (≅ experimental formula A) which prescribes the change of exhaust pulsation with respect to the change of boost pressure (step 314).

When it is determined in step 304 that the fuel injection quantity has increased, an offset change portion and an amplitude change portion of exhaust pulsation with respect to the change of fuel injection quantity are calculated by using an experimental formula B1 (≅ experimental formula B) which prescribes the change of exhaust pulsation with respect to the change of fuel injection quantity (step 316).

When it is determined in step 306 that the retard angle quantity of fuel injection timing has increased, an offset change portion and an amplitude change portion of exhaust pulsation with respect to the retard angle quantity of fuel injection timing are calculated by using an experimental formula B2 (≅ experimental formula B) which prescribes the change of exhaust pulsation with respect to the change of the retard angle quantity of fuel injection timing (step 318).

When it is determined in step 308 that the advance angle quantity of opening timing of the exhaust valve 68 has increased, an offset change portion and an amplitude change portion of exhaust pulsation with respect to the change of advance angle quantity of opening timing of the exhaust valve 68 are calculated by using an experimental formula B3 (≅ experimental formula B) which prescribes the change of exhaust pulsation with respect to the change of the advance angle quantity of opening timing of the exhaust valve 68 (step 320).

When it is determined in step 310 that the controlled quantity of closing timing of the intake valve 64 toward the intake bottom dead center has increased, an offset change portion and an amplitude change portion of exhaust pulsation with respect to the change of the above-described controlled quantity of closing timing of the intake valve 64 are calculated by using an experimental formula B4 (≅ experimental formula B) which prescribes the change of exhaust pulsation with respect to the change of the above-described controlled quantity of closing timing of the intake valve 64 (step 322).

Next, the addition of the offset change portions and the amplitude change portions which have been calculated in relation to each parameter by the processing of steps 312 to 322 is respectively performed (steps 324 and 326). Next, a waveform of exhaust pulsation after the change associated with the occurrence of the increasing factor of exhaust pressure of this time is calculated (estimated) by reflecting the respective added values of the offset change portions and the amplitude change portions calculated in steps 324 and 326 to a predetermined reference waveform of exhaust pulsation (step 328).

Next, the difference between the intake pressure (boost pressure) and the minimum value of exhaust pulsation which has been calculated in step 328 is calculated (step 330). Next, according to the calculated difference, a correction amount of the positive valve overlap period is calculated (step 332). To be more specific, according to the processing of steps 324 to 328, when the first parameter which is the causing factor to cause the above-described offset change to occur has become large, the waveform of exhaust pulsation is calculated such that the minimum value of exhaust pulsation becomes larger. Therefore, in this case, the above-described difference becomes smaller. On the other hand, when the second parameter which is the causing factor to cause the above-described amplitude change to occur has become large, the waveform of exhaust pulsation is calculated such that the minimum value of exhaust pulsation remains to be the same value or the minimum value becomes smaller. Therefore, in this case, the above-described difference does not change, or becomes larger. In present step 332, when the above-described difference becomes smaller, the O/L period is controlled so as to become shorter if the O/L period has been set, and the setting of O/L period is inhibited if the O/L period has not been set. When the above-described difference does not change, the setting of O/L period is maintained. Moreover, when the above-described difference becomes larger, the O/L period is controlled to become longer if the O/L period has been set, and the setting of O/L period is executed if the O/L period has not been set.

According to the routine shown in Figure 10 so far described, when an increasing factor of exhaust pressure has occurred, the valve overlap period is controlled based on the waveform of exhaust pulsation which is obtained by adding up the change portions of exhaust pulsation of each of the first or second parameter that becomes an increasing factor of exhaust pressure. According to experimental formulas A and B shown in Figures 9(A) and 9(B), as for the first parameter which has an influence on the change of exhaust pulsation to become an offset change, it is prescribed such that as the first parameter becomes larger, the offset change portion becomes larger; and as for the second parameter which has an influence on the change of exhaust pulsation to become an amplitude change, it is prescribed such that as the second parameter becomes larger, the amplitude change portion becomes larger. That is, by performing the control of the valve overlap period based on the waveform of exhaust pulsation obtained by adding up the change portions of exhaust pulsation calculated for each parameter according to individual experimental formulas A1, B1, etc., which have similar trends to those of the above-described experimental formulas A and B, in the processing of the routine shown in Figure 10 as well, differentiation of the control of the valve overlap period is realized between the case where the change of exhaust pulsation is an offset change and the case where that is an amplitude change as in Embodiment 1 described above. Thus, the processing of the above-described routine as well makes it possible to utilize a scavenging effect under the situation (under an amplitude change) where there is actually no need of suppressing the setting of positive O/L period even if exhaust pressure rises. Therefore, the control of the present embodiment also makes it possible to bring out a scavenging effect more effectively compared with the above-described conventional control.

It is noted that, in Embodiment 3 described above, the "overlap period control means" according to the above-described first aspect of the present invention is implemented by the ECU 50 executing a series of processing of the routine shown in Figure 10.

Moreover, the "pulsation waveform estimation means" according to the above-described twelfth aspect of the present invention is implemented by the ECU 50 executing the processing of steps 300 to 328.

### Embodiment 4

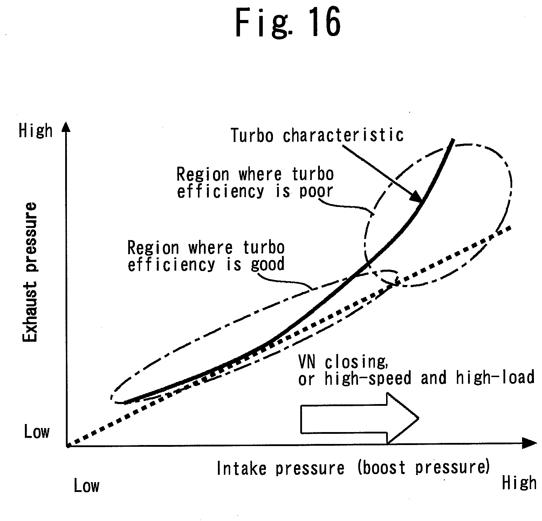

Next, Embodiment 4 of the present invention will be described with reference to Figures 11 and 16.

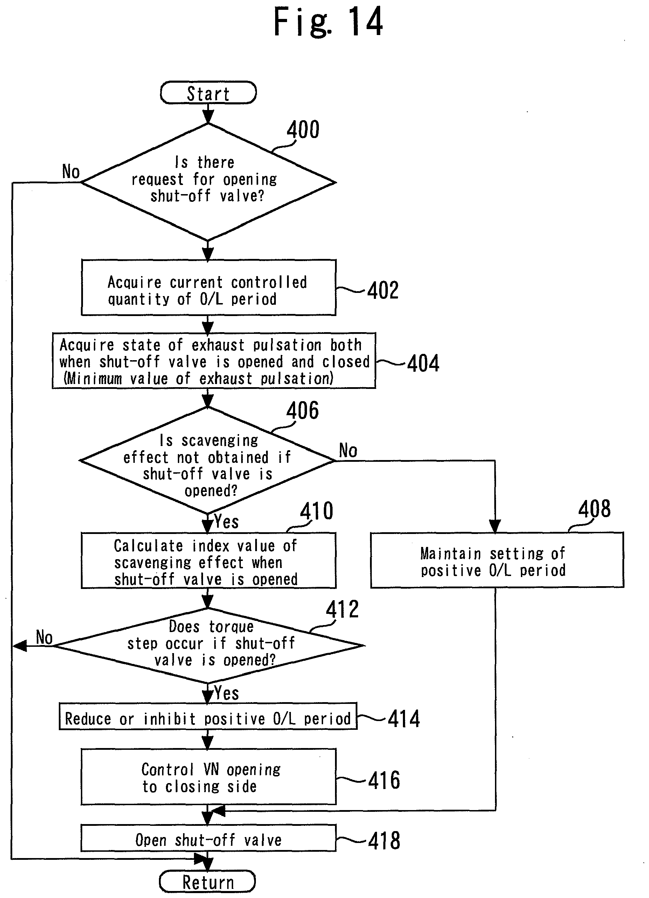

The system of the present embodiment can be implemented by using the hardware configuration shown in Figures 1 and 2 and making the ECU 50 execute the routine shown in Figure 14 described below, in place of the routine shown in Figure 2.

Figure 11 is a diagram to illustrate an opening/closing region of the shut-off valve 42 for adjusting the exhaust system volume. Figure 12 is a diagram representing the change of waveform of exhaust pulsation associated with the opening and closing of the shut-off valve 42.

As shown in Figure 11, a region on the low-speed and low-load side in the operational region of the diesel engine 10 is a mode region which is accompanied by the execution of EGR control. As shown in Figure 12, when the shut-off valve 42 is closed, the exhaust system volume is reduced, and thereby exhaust pulsation becomes stronger. Accordingly, in a region which is on the higher load side than the mode region, it is arranged such that the shut-off valve 42 is closed to improve torque by utilizing a scavenging effect. However, when the shut-off valve 42 is closed, the peak value of exhaust pressure rises as shown in Figure 12. Therefore, from the viewpoint of, for example, protecting the turbo supercharger 22 (turbine 22a), it is necessary to open the shut-off valve 42 in an operational region on the high-speed and high-load side.

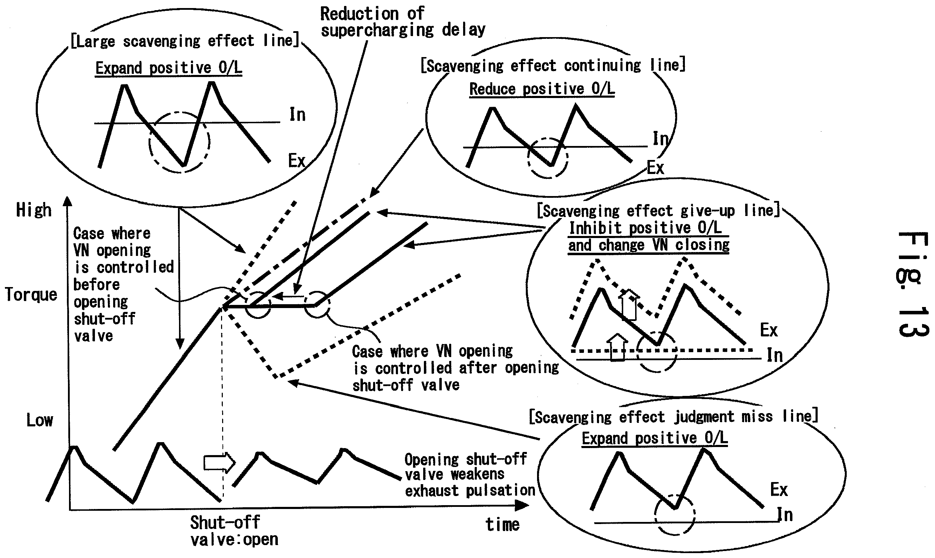

Figure 13 is a time chart to illustrate the outline of the control according to Embodiment 4 of the present invention.

A torque curve indicated as "Large scavenging effect line" in Figure 13 shows a curve when the scavenging effect is effectively utilized by making the O/L period coincide with a timing at which the exhaust pulsation exhibits a trough in a state where a large exhaust pulsation is created as a result of the shut-off valve 42 being closed. If, while such scavenging effect is utilized, the shut-off valve 42 is opened without giving any consideration thereto from the reason of the protection of the above-described turbo supercharger 22, or the like, the exhaust pulsation becomes weak, and thereby the scavenging effect being decreased, or a backflow of exhaust gas to the intake side occurs as a result of the intake pressure becoming lower than the exhaust pressure. As a result of that, as shown by the torque curve indicated as "Scavenging effect judgment miss line", another problem will arise in that the torque significantly declines temporarily.

Accordingly, in the present embodiment, it is arranged such that the state of exhaust pulsation in both when the shut-off valve 42 is opened and closed is constantly estimated (predicted) during the operation of the diesel engine 10. Then, when it is judged that in a state in which a request for opening the shut-off valve 42 is issued during the operation of the diesel engine 10, an effective scavenging effect is not obtained if the shut-off valve 42 is opened, control is performed such that the valve overlap period is eliminated prior to the opening of the shut-off valve 42 as shown by the torque curve indicated as "Scavenging effect give-up line " in Figure 13. In this case, prior to the opening of the shut-off valve 42, further, the VN opening is controlled to be an opening on the closing side at the same time with the execution of the above-described control to eliminate the valve overlap period or after the execution of the control. In other words, first, control is performed such that the valve overlap period is eliminated, and after the execution of the control or at the same time of the execution of the control, the VN opening is controlled to be an opening on the closing side. Then, after that, the shut-off valve 42 is opened. Executing such control of the VN opening as well prior to the opening of the shut-off valve 42 makes it possible to rapidly raise the boost pressure by the adjustment of VN opening compared with a case where the VN opening is controlled to be an opening on the closing side after the shut-off valve 42 is opened, so that supercharging delay can be suppressed to a minimum as shown in Figure 13.

On the other hand, in the present embodiment, when it is judged that even if the shut-off valve 42 is opened, a scavenging effect can be secured in a situation in which a request for opening the shut-off valve 42 is issued, it is arranged such that after the valve overlap period is appropriately reduced so as to match the scavenging effect which declines as shown by the torque curve of a chain line indicated as "Scavenging effect continuing line" in Figure 13, the scavenging effect is continuously utilized.

Figure 14 is a flowchart to show a control routine executed by the ECU 50 in present Embodiment 4 to realize the above described function.

In the routine shown in Figure 14, it is discriminated whether or not there is a request for opening the shut-off valve 42 while a scavenging effect is utilized (step 400). As a result, when it is determined that there is a request for opening the shut-off valve 42, the current controlled quantity of O/L period is acquired (step 402).

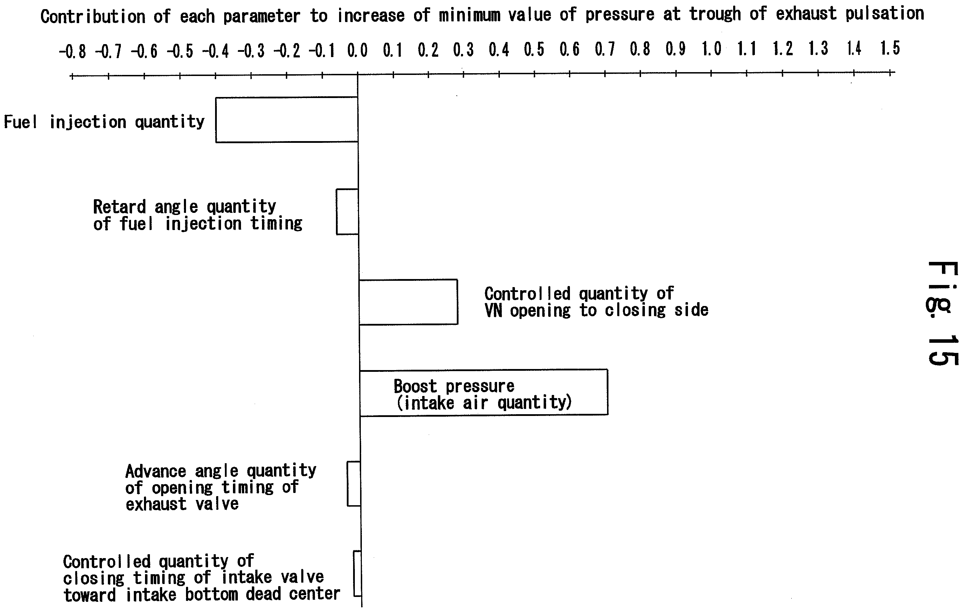

Next, the states of exhaust pulsation (minimum values of pressure in a trough of exhaust pulsation) both when the shut-off valve 42 is opened and when the same is closed are acquired (step 404). In present step 404, it is assumed that the state of exhaust pulsation (the above-described minimum value) is calculated by a similar processing to that of step 202 of the routine shown Figure 8. Figure 15 is a diagram to illustrate the contribution of each of the first and second parameters with respect to an increase of the minimum value of pressure in a trough of exhaust pulsation in a state where the shut-off valve 42 is opened. It is noted that the contribution shown in Figure 7 described above shows contributions in a state where the shut-off valve 42 is closed. As so far already described, in a state where the shut-off valve 42 is opened, the exhaust pulsation becomes weak compared with in a state where the shut-off valve 42 is closed. Therefore, as seen from the comparison between Figure 15 and Figure 7, the contribution in a state where the shut-off valve 42 is opened is set to be generally smaller with the relative proportion of magnitude between each parameter being kept the same with respect to the contribution in a state where the shut-off valve 42 is closed.

In step 404, the states of exhaust pulsation (the above-described minimum value of exhaust pulsation) both when the shut-off valve 42 is opened and when the same is closed are acquired with reference to the contribution shown in Figure 7 and the contribution shown in Figure 15. It is noted that in place of the acquisition of the states of exhaust pulsation by using such contributions, the states of exhaust pulsation both when the shut-off valve 42 is opened and when the same is closed may be acquired through calculation using an experimental formula that prescribes the change of exhaust pulsation for each parameter as with the technique in Embodiment 3 described above. In this case, it is arranged such that experimental formulas corresponding to each of when the shut-off valve 42 is opened and when the same is closed are prescribed in advance.

Next, it is discriminated whether or not it is a state where an effective scavenging effect is not obtained if the shut-off valve 42 is opened, based on the result of acquisition (prediction) of the state of exhaust pulsation when the shut-off valve 42 is opened (step 406). To be more specific, in present step 406, it is discriminated whether or not a region where intake pressure is higher than exhaust pressure is decreased to not more than a predetermined threshold, or a region where intake pressure is higher than exhaust pressure is reversed, based on an acquisition (prediction) result of the above-described minimum value of exhaust pulsation when the shut-off valve 42 is opened and the detected value of intake pressure. As a result of that, when the determination of present step 406 is negative, that is, it is determined (predicted) to be a state where the scavenging effect can be maintained even if the shut-off valve 42 is opened, the setting of positive O/L period is maintained as a result of the O/L period being appropriately reduced so as to conform to the declining scavenging effect (step 408), and thus the scavenging effect is continuously utilized.

If, on the other hand, it is determined (predicted) in step 406 to be a state where an effective scavenging effect is not obtained if the shut-off valve 42 is opened, next, an index value that indicates a degree of scavenging effect is calculated for both when the shut-off valve 42 is opened and when the same is closed (step 410). To be specific, in present step 410, based on the size of the region where intake pressure is larger than exhaust pressure, as the region becomes larger, the above-described index value is calculated to be larger. It is noted that the size of the region where intake pressure is higher than exhaust pressure can be acquired based on the difference between intake pressure and exhaust pressure.

Next, based on the difference of the above-described index values of scavenging effect between when the shut-off valve 42 is opened and when the same is closed, which has been calculated in step 410, it is discriminated whether or not a torque step occurs if the shut-off valve 42 is opened (step 412). To be specific, in present step 412, when the above-described difference of the index values is larger than a predetermined threshold, it is judged that a torque step occurs.

When it is determined in step 412 that a torque step will occur if the shut-off valve 42 is opened, the positive O/L period is reduced or the setting of the O/L period is inhibited (step 414). Next, the VN opening is controlled to be an opening on the closing side (step 416), and thereafter the shut-off valve 42 is opened (step 418).

According to the routine shown in Figure 14 so far described, when it is determined that an effective scavenging effect is not obtained if the shut-off valve 42 is opened when a request for opening the shut-off valve 42 is issued while a scavenging effect is utilized, control is performed such that the valve overlap period is eliminated prior to the opening of the shut-off valve 42. When the condition at which an effective scavenging effect is not obtained if the shut-off valve 42 is opened while a scavenging effect is utilized cannot be predicted, and the shut-off valve 42 is opened, a decline of torque occurs as already described. According to a technique which inhibits the setting of O/L period by detecting the occurrence of such a torque decline, after the fact, through a change of intake air quantity (refer to "Scavenging effect judgment miss line" in Figure 13), a deficiency of acceleration and a degradation of drivability in the diesel engine 10 will occur. On the other hand, if it is arranged that in order to avoid such problems, the setting of O/L period is uniformly inhibited before the shut-off valve 42 is opened, the scavenging effect which would have been obtained is not obtained in a state where scavenging effect can be secured even if the shut-off valve 42 is opened. This causes a deficiency of acceleration and a degradation of drivability in the diesel engine 10. In contrast to that, according to the processing of the above-described routine, prediction is performed whether or not it is in a state where an effective scavenging effect is not obtained if the shut-off valve 41 is opened when a request for opening the shut-off valve 42 is issued while a scavenging effect is utilized, and thereafter based on the prediction result, it is judged whether or not the valve overlap period is reduced or inhibited prior to the opening of the shut-off valve 42. As a result of this, when a request for opening the shut-off valve 42 is issued while a scavenging effect is utilized, it becomes possible to satisfactorily suppress the occurrence of a deficiency of acceleration and a degradation of drivability in the diesel engine 10.

Moreover, according to the above-described routine, when it is judged that an effective scavenging effect is not obtained if the shut-off valve 42 is opened when a request for opening the shut-off valve 42 is issued while a scavenging effect is utilized, not only the above-described control by which the valve overlap period is eliminated, but also control to close the VN opening is executed prior to the opening of the shut-off valve 42. Since a state of low exhaust pressure is needed to effectively achieve a scavenging effect, the VN opening on the opening side is used. Therefore, while a scavenging effect is utilized, the boost pressure has become low in absolute value. As a result, if an attempt is made to narrow the O/L period to give up the utilization of scavenging effect when the shut-off valve 42 is opened while a scavenging effect is utilized, the boost pressure is lowered. Therefore, if an attempt is made to secure the boost pressure by controlling the VN opening to an opening on the closing side after the shut-off valve 42 is opened, a torque step (a state where the increase of torque is stagnant) occurs as shown in Figure 13. Such a torque step causes an acceleration-halt feel. In contrast to that, according to the processing of the above-described routine, the control to close the VN opening is executed prior to the opening of the shut-off valve 42. This enables to suppress the supercharging delay that occurs when the O/L period is narrowed and the shut-off valve 42 is opened.

Figure 16 is a diagram to illustrate the merit of control B in which the utilization of scavenging effect is continued when the shut-off valve 42 is opened, against control A in which the utilization of scavenging effect is given up and the VN opening is made an opening on the closing side when the shut-off valve 42 is opened.

Figure 16 is a diagram that represents the characteristic of the turbo supercharger 22 in the relation between intake pressure (boost pressure) and exhaust pressure. As shown in Figure 16, the turbocharging efficiency is good in a region where intake pressure is relatively low, and intake pressure satisfactorily rises with respect to the rise of exhaust pressure; however, in a region where intake pressure is relatively high, the turbo efficiency is poor and the rise of intake pressure with respect to the rise of exhaust pressure becomes dull Therefore, in a low intake-pressure region where the turbocharging efficiency is good, a condition in which intake pressure is higher than exhaust pressure (the minimum value of exhaust pulsation) is easier to be created and utilizing scavenging effect becomes easier. On the contrary, in a high intake-pressure region where the turbocharging efficiency is poor, a condition in which intake pressure is higher than exhaust pressure (the minimum value of exhaust pulsation) is less easy to be created, and scavenging effect becomes less easy to be utilized.

The above-described region where the turbocharging efficiency is good can be realized by controlling the VN opening to be a predetermined opening of the opening side where the turbocharging efficiency is excellent. Further, as shown in Figure 16, when the VN opening is controlled from a state where the VN opening is controlled to be such opening of an excellent turbocharging efficiency, to an opening on the closing side, or when the operation region of the diesel engine 10 is shifted from the state to a high-speed and high-load region, a shift from a region of a good turbocharging efficiency to a region of a poor turbocharging efficiency occurs.

When a request for opening the shut-off valve 42 is issued while a scavenging effect is utilized, depending on situations, there may be a case where a required torque (intake air quantity) can be obtained either in the case of executing the control A in which a scavenging effect is utilized under a low boost pressure while the VN opening is maintained at an opening of a good turbocharging efficiency, or in the case of executing the control B in which the VN opening is controlled to an opening on the closing side while the O/L period is narrowed to give up a scavenging effect so that a high boost pressure is obtained. Under such a situation, it is preferable to select the above-described control A (continuation of scavenging effect utilization) which uses a state of a good turbocharging efficiency and therefore is advantageous in fuel economy.

It is noted that in Embodiment 4 described above, the "exhaust volume adjustment means" according to the above-described thirteenth aspect of the present invention is implemented by the ECU 50 executing the processing of step 418; the "exhaust pulsation acquisition means" according to the above-described thirteenth aspect of the present invention by the ECU 50 executing the process of step 404; the "scavenging effect prediction means" according to the above-described thirteenth aspect of the present invention by the ECU 50 executing the processing of steps 406, 410, and 412; and the "overlap-control first-out execution means" according to the above-described thirteenth aspect of the present invention by the ECU 50 executing the process of step 414 prior to the processing of step 418, respectively.

Further, the "nozzle opening control means" according to the above-described fourteenth aspect of the present invention is implemented by the ECU 50 executing the processing of step 416, and the "nozzle-control first-out execution means" according to the above-described fourteenth aspect of the present invention by the ECU 50 executing the processing of step 416 prior to the processing of step 418, respectively.

## Claims

1. A control apparatus for an internal combustion engine, comprising:
a variable valve operating mechanism (66, 70) configured to make a valve overlap period, in which an intake valve open period and an exhaust valve open period overlap with each other variable; and
overlap period control means configured to control the valve overlap period such that the overlap period coincides with a timing at which exhaust pulsation exhibits a trough, by using the variable valve operating mechanism (66, 70),
wherein the overlap period control means is configured to differentiate the control of the valve overlap period between a case where an offset change occurs in which exhaust pulsation entirely changes in an increasing direction of exhaust pressure, and a case where an amplitude change occurs in which an amplitude of exhaust pulsation changes more greatly than a minimum value of pressure at a trough of exhaust pulsation;
wherein the control apparatus further comprises accelerator depression detection means which detects a presence or absence of a depression of an accelerator pedal of a vehicle equipped with the internal combustion engine (10),
wherein the overlap period control means is configured to execute the control of the valve overlap period when the depression of the accelerator pedal is detected;
**characterized in that**
the control apparatus further comprises pulsation-change mode discrimination means that is configured to discriminate whether a change of exhaust pulsation is the offset change or the amplitude change, and
wherein the overlap period control means is configured to differentiate the control of the valve overlap period according to a discrimination result of the pulsation-change mode discrimination means.

2. The control apparatus for an internal combustion engine according to claim 1,
wherein the case where the offset change occurs corresponds to a case where exhaust pulsation changes due to a change of one or more first parameters that influence an exhaust passage area and/or an exhaust gas flow rate, and
wherein the case where an amplitude change occurs corresponds to a case where exhaust pulsation changes due to a change of one or more second parameters that influence energy of exhaust gas when an exhaust valve (68) opens.

3. The control apparatus for an internal combustion engine according to claim 2,
wherein the first parameter is at least one of a boost pressure, a controlled quantity of a variable-nozzle opening to a closing side, and an intake air quantity, and
wherein the second parameter is at least one of a fuel injection quantity, a retard angle quantity of a fuel injection timing, an advance angle quantity of an opening timing of an exhaust valve (68), and a controlled quantity of a closing timing of an intake valve (64) toward an intake bottom dead center.

4. The control apparatus for an internal combustion engine according to claim 1,
wherein in a case where the valve overlap period has been set, the overlap period control means performs control such that the valve overlap period becomes small or zero when the offset change has occurred, and such that a current valve overlap period is maintained or the valve overlap period is expanded when the amplitude change has occurred.

5. The control apparatus for an internal combustion engine according to claim 1,
wherein in a case where the valve overlap period has not been set, or has not been substantially set, the overlap period control means does not set the valve overlap period when the offset change has occurred, and sets the valve overlap period when the amplitude change has occurred.

6. The control apparatus for an internal combustion engine according to claim 2 or 3, further comprising:
parameter change detection means that detects changes of each of the first parameter and the second parameter,
wherein the overlap period control means differentiates the control of the valve overlap period according to whether a parameter of which the change has been detected is the first parameter or the second parameter.

7. The control apparatus for an internal combustion engine according to claim 6,
wherein in a case where the valve overlap period has been set, the overlap period control means controls such that the valve overlap period becomes smaller or becomes zero when the first parameter becomes larger, and such that a current valve overlap period is maintained or the valve overlap period is expanded when the second parameter becomes larger.

8. The control apparatus for an internal combustion engine according to claim 6,
wherein in a case where the valve overlap period has not been set, or has not been substantially set, the overlap period control means does not set the valve overlap period when the first parameter becomes larger, and sets the valve overlap period when the second parameter becomes larger.

9. The control apparatus for an internal combustion engine according to claim 2 or 3,
wherein in a case where there are a plurality of the first parameters, the first parameters are set such that as influence thereof on a change of the minimum value of exhaust pulsation becomes larger, a control quantity of the valve overlap period when the first parameters become larger becomes larger.

10. The control apparatus for an internal combustion engine according to claim 2 or 3,
wherein in a case where there are a plurality of the second parameters, the second parameters are set such that as influence thereof on a change of the minimum value of exhaust pulsation becomes larger, a control quantity of the valve overlap period when the second parameters become large becomes larger.

11. The control apparatus for an internal combustion engine according to claim 2 or 3, further comprising:
pulsation waveform estimation means that estimates pressure at a trough of exhaust pulsation associated with a change of each of the first parameter and the second parameter based on a relation in which each of the first parameter and the second parameter is correlated with a waveform of exhaust pulsation in advance,
wherein the overlap period control means controls the valve overlap period based on the pressure in the trough of exhaust pulsation estimated by the pulsation waveform estimation means.

12. The control apparatus for an internal combustion engine according to claim 1, further comprising:
exhaust volume adjustment means that adjusts an exhaust system volume;
exhaust pulsation acquisition means that acquires pressure in a trough of exhaust pulsation; and
scavenging effect prediction means that predicts a change of scavenging effect associated with an enlargement of the exhaust system volume,
wherein the overlap period control means includes overlap-control first-out execution means for controlling such that the valve overlap period is eliminated prior to the enlargement of the exhaust system volume, when it is judged that if the enlargement of the exhaust system volume is performed, effective scavenging effect is not obtained in a situation in which a request for enlarging the exhaust system volume is issued.

13. The control apparatus for an internal combustion engine according to claim 12,
wherein the internal combustion engine (10) further comprises a turbosupercharger (22), the turbosupercharger (22) including a turbine (22a) driven by exhaust energy and a variable nozzle (22c) for adjusting a flow rate of exhaust gas supplied to the turbine (22a),
wherein the control apparatus for the internal combustion engine (10) further comprises nozzle opening control means for controlling the opening the variable nozzle (22c), and
wherein the nozzle opening control means includes nozzle-control first-out execution means which, when it is judged that if the enlargement of the exhaust system volume is performed, an effective scavenging effect is not obtained in a situation in which a request for enlarging the exhaust system volume is issued, prior to the enlargement of the exhaust system volume, controls the opening of the variable nozzle (22c) to be an opening on a closing side, at a same time with the control of the valve overlap period by the overlap-control first-out execution means, or after executing the control.

## Patentansprüche

1. Steuervorrichtung für einen Verbrennungsmotor mit:
einem variablen Ventilbetätigungsmechanismus (66, 70), der so aufgebaut ist, dass er eine Ventilüberlappungszeitspanne gestaltet, in der eine Einlassventilöffnungszeitspanne und eine Auslassventilöffnungszeitspanne sich miteinander variabel überlappen; und
einer Überlappungszeitspannensteuereinrichtung, die so aufgebaut ist, dass sie die Ventilüberlappungszeitspanne so, dass die Überlappungszeitspanne mit einem Zeitpunkt übereinstimmt, bei dem die Auslasspulsation ein Tief aufzeigt, unter Verwendung des variablen Ventilbetätigungsmechanismus (66, 70) steuert,
wobei die Überlappungszeitspannensteuereinrichtung so aufgebaut ist, dass sie bei der Steuerung der Ventilüberlappungszeitspanne zwischen einem Fall, bei dem eine Versatzänderung auftritt, bei der die Auslasspulsation sich gänzlich in einer zunehmenden Richtung des Auslassdrucks ändert, und einen Fall unterscheidet, bei dem eine Amplitudenänderung auftritt, bei der eine Amplitude der Auslasspulsation sich stärker ändert als ein minimaler Druckwert an einem Tief der Auslasspulsation;
wobei die Steuervorrichtung des Weiteren eine Gaspedalniederdrückerfassungseinrichtung aufweist, die ein Vorhandensein oder Fehlen eines Niederdrückens eines Gaspedals eines Fahrzeugs erfasst, das mit dem Verbrennungsmotor (10) ausgestattet ist,
wobei die Überlappungszeitspannensteuereinrichtung so aufgebaut ist, dass sie die Steuerung der Überlappungszeitspanne ausführt, wenn das Niederdrücken des Gaspedals erfasst ist;
**dadurch gekennzeichnet, dass**
die Steuervorrichtung des Weiteren eine Pulsationsänderungsmodusunterscheidungseinrichtung aufweist, die so aufgebaut ist, dass sie unterscheidet, ob eine Änderung der Auslasspulsation die Versatzänderung oder die Amplitudenänderung ist, und
wobei die Überlappungszeitspannensteuereinrichtung so aufgebaut ist, dass sie die Steuerung der Ventilüberlappungszeitspanne gemäß einem Unterscheidungsergebnis der Pulsationsänderungsmodusunterscheidungseinrichtung unterscheidet.

2. Steuervorrichtung für einen Verbrennungsmotor gemäß Anspruch 1,
wobei der Fall, bei dem die Versatzänderung auftritt, einem Fall entspricht, bei dem die Auslasspulsation sich aufgrund einer Änderung von einem oder mehreren ersten Parametern ändert, die eine Abgaskanalfläche und/oder eine Abgasströmungsrate beeinflussen, und
wobei der Fall, bei dem eine Amplitudenänderung auftritt, einem Fall entspricht, bei dem die Auslasspulsation sich aufgrund einer Änderung von einem oder mehreren zweiten Parametern ändert, die eine Energie eines Abgases beeinflussen, wenn ein Auslassventil (68) öffnet.

3. Steuervorrichtung für einen Verbrennungsmotor gemäß Anspruch 2,
wobei der erste Parameter zumindest entweder ein Verstärkungsdruck, eine gesteuerte Größe einer variablen Düsenöffnung zu einer Schließseite und/oder eine Einlassluftmenge ist, und
wobei der zweite Parameter zumindest entweder eine Kraftstoffeinspritzmenge, eine Nacheilwinkelgröße einer Kraftstoffeinspritzzeit, eine Voreilwinkelgröße einer Öffnungszeit eines Auslassventils (68), und/oder eine gesteuerte Größe einer Schließzeit eines Einlassventils (64) zu einem unteren Einlasstotpunkt ist.

4. Steuervorrichtung für einen Verbrennungsmotor gemäß Anspruch 1,
wobei in einem Fall, bei dem die Ventilüberlappungszeitspanne festgelegt worden ist, die Überlappungszeitspannensteuereinrichtung eine derartige Steuerung ausführt, bei der die Ventilüberlappungszeitspanne gering oder zu null wird, wenn die Versatzänderung aufgetreten ist, und so ausführt, dass eine gegenwärtige Ventilüberlappungszeitspanne beibehalten wird oder die Ventilüberlappungszeitspanne erweitert wird, wenn die Amplitudenänderung aufgetreten ist.

5. Steuervorrichtung für einen Verbrennungsmotor gemäß Anspruch 1,
wobei in einem Fall, bei dem die Ventilüberlappungszeitspanne nicht festgelegt ist oder im Wesentlichen nicht festgelegt ist, die Überlappungszeitspannensteuereinrichtung die Ventilüberlappungszeitspanne nicht festlegt, wenn die Versatzänderung aufgetreten ist, und die Ventilüberlappungszeitspanne festlegt, wenn die Amplitudenänderung aufgetreten ist.

6. Steuervorrichtung für einen Verbrennungsmotor gemäß Anspruch 2 oder 3, die des Weiteren Folgendes aufweist:
eine Parameteränderungserfassungseinrichtung, die Änderungen von sowohl dem ersten als auch dem zweiten Parameter erfasst,
wobei die Überlappungszeitspannensteuereinrichtung die Steuerung der Ventilüberlappungszeitspanne gemäß dem Umstand unterscheidet, ob ein Parameter, dessen Änderung erfasst worden ist, der erste Parameter oder der zweite Parameter ist.

7. Steuervorrichtung für einen Verbrennungsmotor gemäß Anspruch 6,
wobei in einem Fall, bei dem die Ventilüberlappungszeitspanne festgelegt worden ist, die Überlappungszeitspannensteuereinrichtung derart steuert, dass die Ventilüberlappungszeitspanne geringer oder zu null wird, wenn der erste Parameter größer wird, und derart steuert, dass eine gegenwärtige Ventilüberlappungszeitspanne beibehalten wird oder die Ventilüberlappungszeitspanne erweitert wird, wenn der zweite Parameter größer wird.

8. Steuervorrichtung für einen Verbrennungsmotor gemäß Anspruch 6,
wobei in einem Fall, bei dem die Ventilüberlappungszeitspanne nicht festgelegt ist oder im Wesentlichen nicht festgelegt ist, die Überlappungszeitspannensteuereinrichtung die Ventilüberlappungszeitspanne nicht festlegt, wenn der erste Parameter größer wird, und die Ventilüberlappungszeitspanne festlegt, wenn der zweite Parameter größer wird.

9. Steuervorrichtung für einen Verbrennungsmotor gemäß Anspruch 2 oder 3,
wobei in einem Fall, bei dem eine Vielzahl der ersten Parameter vorhanden sind, die ersten Parameter so festgelegt sind, dass, wenn ihr Einfluss auf eine Änderung des minimalen Werts der Auslasspulsation größer wird, eine Steuergröße der Ventilüberlappungszeitspanne größer wird, wenn die ersten Parameter größer werden.

10. Steuervorrichtung für einen Verbrennungsmotor gemäß Anspruch 2 oder 3,
wobei in einem Fall, bei dem eine Vielzahl an zweiten Parametern vorhanden ist, die zweiten Parameter so festgelegt sind, dass, wenn ihr Einfluss auf eine Änderung des minimalen Wertes der Auslasspulsation größer wird, eine Steuergröße der Ventilüberlappungszeitspanne größer wird, wenn die zweiten Parameter größer werden.

11. Steuervorrichtung für einen Verbrennungsmotor gemäß Anspruch 2 oder 3, die des Weiteren Folgendes aufweist:
eine Pulsationswellenformabschätzeinrichtung, die einen Druck an einem Tief einer Auslasspulsation, die zu einer Änderung von sowohl dem ersten Parameter als auch dem zweiten Parameter zugehörig ist, auf der Basis einer Beziehung abschätzt, bei der sowohl der erste Parameter als auch der zweite Parameter mit einer Wellenform der Auslasspulsation zuvor in Wechselbeziehung steht,
wobei die Überlappungszeitspannensteuereinrichtung die Ventilüberlappungszeitspanne auf der Basis des Drucks in dem Tief der Auslasspulsation steuert, die durch die Pulsationswellenformabschätzeinrichtung abgeschätzt wird.

12. Steuervorrichtung für einen Verbrennungsmotor gemäß Anspruch 1, die des Weiteren Folgendes aufweist:
eine Auslassvolumeneinstelleinrichtung, die ein Auslassystemvolumen einstellt;
eine Auslasspulsationserlangungseinrichtung, die einen Druck in einem Tief einer Auslasspulsation erlangt; und
eine Spüleffektvorhersageeinrichtung, die eine Änderung eines Spüleffekts vorhersagt, der zu einer Vergrößerung des Auslassystemvolumens zugehörig ist,
wobei die Überlappungszeitspannensteuereinrichtung eine Überlappungssteuerungs-Ersthandhabungs-Ausführeinrichtung hat für ein derartiges Steuern, dass die Ventilüberlappungszeitspanne vor der Vergrößerung des Auslassystemvolumens beseitigt wird, wenn beurteilt wird, dass, wenn die Vergrößerung des Auslassystemvolumens ausgeführt ist, ein effektiver Spüleffekt nicht in einer Situation erlangt wird, bei der Anforderung an einem Vergrößern des Auslassystemvolumens ausgegeben ist.

13. Steuervorrichtung für einen Verbrennungsmotor gemäß Anspruch 12, wobei der Verbrennungsmotor (10) des Weiteren einen Turbolader (22) aufweist, wobei der Turbolader (22) eine Turbine (22a), die durch Abgasenergie angetrieben wird und eine variable Düse (22c) hat zum Einstellen einer Strömungsrate des durch die Turbine (22a) gelieferten Abgases,
wobei die Steuervorrichtung für den Verbrennungsmotor (10) des Weiteren eine Düsenöffnungssteuereinrichtung aufweist zum Steuern der Öffnung der variablen Düse (22c), und
wobei die Düsenöffnungssteuereinrichtung eine Düsensteuer-Ersthandhabungs-Ausführeinrichtung hat, die, wenn beurteilt wird, dass, wenn die Vergrößerung des Auslassystemvolumens ausgeführt wird, ein effektiver Spüleffekt nicht in einer Situation erlangt wird, bei der eine Anforderung an ein Vergrößern des Auslassystemvolumens ausgegeben ist, vor der Vergrößerung des Auslassystemvolumens die Öffnung der variablen Düse (22c) so, dass sie eine Öffnung an einer Schließseite ist, steuert gleichzeitig mit der Steuerung der Ventilüberlappungszeitspanne durch die Überlappungssteuerungs-Ersthandhabungs-Ausführeinrichtung oder nach dem Ausführen der Steuerung.

## Revendications

1. Appareil de commande pour un moteur à combustion interne, comprenant :
un mécanisme opérationnel de soupape variable (66, 70) configuré pour créer une période de chevauchement de soupape, dans laquelle une période ouverte de soupape d'amenée et une période ouverte de soupape d'évacuation se chevauchent l'une et l'autre de manière variable ; et
des moyens de commande de période de chevauchement configurés pour commander la période de chevauchement de soupape de telle sorte que la période de chevauchement coïncide avec un moment pendant lequel une impulsion d'évacuation présente un creux, en utilisant le mécanisme opérationnel de soupape variable (66, 70),
dans lequel les moyens de commande de période de chevauchement sont configurés pour différentier la commande de la période de chevauchement de soupape entre un cas où un changement de décalage survient pendant lequel une impulsion d'évacuation change entièrement suivant une direction croissante de pression d'évacuation, et un cas où un changement d'amplitude survient pendant lequel une amplitude d'une impulsion d'évacuation change considérablement plus qu'une valeur minimum de pression à un creux d'impulsion d'évacuation ;
dans lequel l'appareil de commande comprend en outre des moyens de détection de dépression d'accélérateur qui détectent une présence ou une absence d'une dépression d'une pédale d'accélérateur d'un véhicule équipé d'un moteur à combustion interne (10),
dans lequel les moyens de commande de période de chevauchement sont configurés pour exécuter la commande de la période de chevauchement de soupape quand la dépression de la pédale d'accélérateur est détectée ;
**caractérisé en ce que**
l'appareil de commande comprend en outre des moyens de discrimination de mode de changement d'impulsion qui sont configurés pour distinguer si un changement de l'impulsion d'évacuation est le changement de décalage ou le changement d'amplitude, et
dans lequel les moyens de commande de période de chevauchement sont configurés pour différentier la commande de la période de chevauchement de soupape selon un résultat de discrimination des moyens de discrimination de mode de changement d'impulsion.

2. Appareil de commande pour un moteur à combustion interne selon la revendication 1,
dans lequel le cas où le changement de décalage survient correspond à un cas où des changements d'impulsion d'évacuation dus à un changement d'un ou de plusieurs premiers paramètres qui influencent une aire de passage d'évacuation et/ou un débit de gaz d'échappement, et
dans lequel le cas où un changement d'amplitude survient correspond à un cas où des changements d'impulsion d'évacuation dus à un changement d'un ou de plusieurs seconds paramètres qui influencent l'énergie d'un gaz d'échappement quand une soupape d'évacuation (68) s'ouvre.

3. Appareil de commande pour un moteur à combustion interne selon la revendication 2,
dans lequel le premier paramètre est au moins l'un parmi une pression de propulsion, une quantité commandée d'une ouverture de buse variable à un côté de fermeture et une quantité d'air d'amenée, et
dans lequel le second paramètre est au moins l'un parmi une quantité d'injection de carburant, une quantité d'angle de retard d'un moment d'injection de carburant, une quantité d'angle en avance d'un moment d'ouverture d'une soupape d'évacuation (68) et une quantité commandée d'un moment de fermeture d'une soupape d'amenée (64) vers un centre mort inférieur d'amenée.

4. Appareil de commande pour un moteur à combustion interne selon la revendication 1,
dans lequel dans un cas où la période de chevauchement de soupape a été configurée, les moyens de commande de période de chevauchement effectuent une commande de telle sorte que la période de chevauchement de soupape devienne petite ou nulle quand le changement de décalage est survenu, et de telle sorte qu'une période de chevauchement de soupape actuelle est maintenue ou que la période de chevauchement de soupape est prolongée quand le changement d'amplitude est survenu.

5. Appareil de commande pour un moteur à combustion interne selon la revendication 1,
dans lequel dans un cas où la période de chevauchement de soupape n'a pas été configurée, ou n'a pas été essentiellement configurée, les moyens de commande de période de chevauchement ne configurent pas la période de chevauchement de soupape quand le changement de décalage est survenu et configurent la période de chevauchement de soupape quand le changement d'amplitude est survenu.

6. Appareil de commande pour un moteur à combustion interne selon la revendication 2 ou 3, comprenant en outre :
des moyens de détection de changement de paramètre qui détectent des changements de chacun des paramètres du premier et du second paramètres,
dans lequel les moyens de commande de période de chevauchement différentient la commande de la période de chevauchement de soupape en fonction de si le paramètre dont le changement a été détecté est le premier paramètre ou le second paramètre.

7. Appareil de commande pour un moteur à combustion interne selon la revendication 6, dans lequel
dans un cas où la période de chevauchement de soupape a été configurée, les moyens de commande de période de chevauchement commandent de façon à ce que la période de chevauchement de soupape devienne plus petite ou devienne nulle quand le premier paramètre devient plus grand et de façon à ce qu'une période de chevauchement de soupape actuelle soit maintenue ou qu'une période de chevauchement de soupape actuelle soit prolongée quand le second paramètre devient plus grand.

8. Appareil de commande pour un moteur à combustion interne selon la revendication 6, dans lequel
dans un cas où la période de chevauchement de soupape n'a pas été configurée, ou n'a pas été essentiellement configurée, les moyens de commande de période de chevauchement ne configurent pas la période de chevauchement de soupape quand le premier paramètre devient plus grand et configurent la période de chevauchement de soupape quand le second paramètre devient plus grand.

9. Appareil de commande pour un moteur à combustion interne selon la revendication 2 ou 3, dans lequel
dans un cas où il existe une pluralité de premiers paramètres, les premiers paramètres sont configurés de telle sorte qu'au fur et à mesure que leur influence sur un changement de la valeur minimum d'une impulsion d'évacuation devient plus grande, une quantité de commande de la période de chevauchement de soupape devient plus grande quand les premiers paramètres deviennent plus grands.

10. Appareil de commande pour un moteur à combustion interne selon la revendication 2 ou 3, dans lequel
dans un cas où il existe une pluralité de seconds paramètres, les seconds paramètres sont configurés de telle sorte qu'au fur et à mesure que leur influence sur un changement de la valeur minimum d'une impulsion d'évacuation devient plus grande, une quantité de commande de la période de chevauchement de soupape devient plus grande quand les seconds paramètres deviennent plus grands.

11. Appareil de commande pour un moteur à combustion interne selon la revendication 2 ou 3, comprenant en outre :
des moyens d'estimation de forme d'onde d'impulsion qui estiment la pression à un creux d'une impulsion d'évacuation associée à un changement de chacun des premiers paramètres et des seconds paramètres sur la base d'une relation dans laquelle chacun des premiers paramètres et des seconds paramètres est mis en corrélation avec une forme d'onde d'une impulsion d'évacuation au préalable,
dans lequel les moyens de commande de période de chevauchement commandent la période de chevauchement de soupape sur la base de la pression dans le creux de l'impulsion d'évacuation estimée par les moyens d'estimation de forme d'onde d'impulsion.

12. Appareil de commande pour un moteur à combustion interne selon la revendication 1, comprenant en outre :
des moyens d'ajustement de volume d'évacuation qui ajustent un volume de système d'évacuation ;
des moyens d'acquisition d'impulsion d'évacuation qui acquièrent une pression dans un creux d'une impulsion d'évacuation ; et
des moyens de prédiction d'effet de récupération qui prévoient un changement d'un effet de récupération associé à un agrandissement du volume du système d'évacuation,
dans lequel les moyens de commande de période de chevauchement comprennent des moyens d'exécution de commande de chevauchement premier sorti pour commander de telle sorte que la période de chevauchement de soupape est éliminée avant l'agrandissement du volume du système d'évacuation, quand il est jugé que si l'agrandissement du volume du système d'évacuation est effectué, un effet de récupération efficace n'est pas obtenu dans une situation dans laquelle une demande d'agrandissement du volume du système d'évacuation est émise.

13. Appareil de commande pour un moteur à combustion interne selon la revendication 12, dans lequel
le moteur à combustion interne (10) comprend en outre un turbocompresseur (22), le turbocompresseur (22) comprenant une turbine (22a) entraînée par une énergie d'évacuation et une buse variable (22c) pour régler un débit du gaz d'échappement fourni à la turbine (22a),
dans lequel l'appareil de commande pour le moteur à combustion interne (10) comprend en outre des moyens de commande d'ouverture de buse pour commander l'ouverture de la buse variable (22c), et
dans lequel les moyens de commande d'ouverture de buse comprennent des moyens d'exécution de commande de buse première sortie qui, quand il est jugé que si l'agrandissement du volume d'évacuation est effectué, un effet de récupération efficace n'est pas obtenu dans une situation dans laquelle une demande d'agrandissement du volume du système d'évacuation est émise, avant l'agrandissement du volume du système d'évacuation, commandent l'ouverture de la buse variable (22c) de façon à ce qu'elle soit une ouverture sur un côté de fermeture, en même temps que la commande de la période de chevauchement de soupape par les moyens d'exécution de commande de chevauchement premier sorti ou après l'exécution de la commande.
